# EUROPEAN PATENT SPECIFICATION

(11) **EP 4 571 440 B1**
(45) Date of publication and mention of the grant of the patent: **14.10.2026**
(21) Application number: 24215614.9
(22) Date of filing: 26.11.2024
(51) Int. Cl.: G05B 19/4093

(54) **PLANAR VERTICAL MILLING PARAMETER OPTIMIZATION AND MACHINING PERFORMANCE PREDICTION METHOD CONSIDERING MULTIPLE MACHINING STAGES**
VERFAHREN ZUR OPTIMIERUNG PLANARER VERTIKALER FRÄSPARAMETER UND VORHERSAGE DER BEARBEITUNGSLEISTUNG UNTER BERÜCKSICHTIGUNG MEHRERER BEARBEITUNGSSTUFEN
PROCÉDÉ D'OPTIMISATION DE PARAMÈTRES DE FRAISAGE VERTICAL PLAN ET DE PRÉDICTION DE PERFORMANCE D'USINAGE PRENANT EN COMPTE DE MULTIPLES ÉTAGES D'USINAGE

(30) Priority: 12.12.2023 CN 202311695679
(43) Date of publication of application: 18.06.2025
(73) Proprietor: Shandong University Of Science And Technology, Qingdao, Shandong 266590 (CN)
(72) Inventor: JIA, Shun, Qingdao, 266590 (CN); WANG, Shang, Qingdao, 266590 (CN); LI, Shuyu, Qingdao, 266590 (CN); LIU, Yang, Qingdao, 266590 (CN); SUI, Yang, Qingdao, 266590 (CN); ZHANG, Guoqiang, Qingdao, 266590 (CN); SONG, Jinyun, Qingdao, 266590 (CN); WU, Bingyin, Qingdao, 266590 (CN); YANG, Yang, Qingdao, 266590 (CN); MA, Le, Qingdao, 266590 (CN); ZHANG, Jingyan, Qingdao, 266590 (CN); SU, Shengshuai, Qingdao, 266590 (CN)
(74) Representative: JD&P Patent Attorneys Joanna Dargiewicz & Partners

(56) References cited:
- US-B1- 7 933 679
- FENG CHUNHUA ET AL: "A systematic method of optimization of machining parameters considering energy consumption, machining time, and surface roughness with experimental analysis", THE INTERNATIONAL JOURNAL OF ADVANCED MANUFACTURING TECHNOLOGY, SPRINGER, LONDON, vol. 119, no. 11-12, 25 January 2022 (2022-01-25), pages 7383 - 7401, XP037778531, ISSN: 0268-3768, [retrieved on 20220125], DOI: 10.1007/S00170-022-08772-6
- DENG CONGYING ET AL: "Multi-objective modelling and optimal parameter selection of a multi-pass milling process considering uncertain milling stability constraint", THE INTERNATIONAL JOURNAL OF ADVANCED MANUFACTURING TECHNOLOGY, SPRINGER, LONDON, vol. 120, no. 9-10, 6 April 2022 (2022-04-06), pages 6225 - 6240, XP037843853, ISSN: 0268-3768, [retrieved on 20220406], DOI: 10.1007/S00170-022-09142-Y

## Description

### TECHNICAL FIELD

The present invention relates to the field of planar vertical milling parameter optimization, and in particular, to a planar vertical milling parameter optimization and machining performance prediction method considering multiple machining stages.

### BACKGROUND

As one of the most common machining methods, the planar vertical milling process is widely used in the process of manufacturing parts and products. The successful application of planar vertical milling often depends on the optimization of process parameters to ensure high-quality machining, the best production efficiency and low energy consumption.

Conventional planar vertical milling process parameter optimization is usually based on empirical methods and experiments, which often limits the optimization range of process parameters, and may lead to the failure to achieve the best machining performance and the waste of materials and human resources. In addition, at present, most of the researches on planar vertical milling process parameter optimization focus on a single machining stage, i.e. a rough milling stage or a finish milling stage. However, in actual production and machining, the process often requires the cooperation of multiple machining stages, and the process parameter optimization of the multiple machining stages is a coherent, dynamic process. As a result, a process parameter optimization result for a single machining stage is often not applicable, so the optimization result is difficult to be directly applied to actual production.

### SUMMARY

In view of the problem existing in the prior art, the present invention provides a planar vertical milling parameter optimization and machining performance prediction method considering multiple machining stages. Taking the multiple machining stages into comprehensive consideration, the method can accurately and efficiently determine optimal process parameters and predict machining performance in advance by establishing an accurate multi-objective mathematical model and solving the multi-objective mathematical model by means of an optimization algorithm, thereby guiding the planar vertical milling process.

The present invention adopts the following technical solution:
A planar vertical milling parameter optimization and machining performance prediction method considering multiple machining stages includes the following steps:
Step 1: making preparation: A part drawing is checked to identify a to-be-machined plane, dimension feature parameters of the to-be-machined plane are analyzed, and the models of a machine tool and a cutting tool are determined, so that a machining process is obtained;
Step 2: setting optimization variables: spindle speed *n^{r},* feed *f^{r},* milling depth ${a}_{p}^{r}$ and milling width ${a}_{e}^{r}$ at a rough milling stage and spindle speed *n^{f} ,* feed *f ^{f} ,* milling depth ${a}_{p}^{f}$ and milling width ${a}_{e}^{f}$ at a finish milling stage are set as optimization variables;
Step 3: selecting optimization objectives: machining efficiency, machining energy consumption and machining quality;
Step 4: determining constraint conditions;
Step 5: establishing a multi-objective optimization mathematical model for planar vertical milling process parameters.
Step 6: obtaining, according to the multi-objective optimization mathematical model for planar vertical milling process parameters in step 5, a machining process parameter combination and a machining performance prediction value.
Step 7: guiding, based on the machining process parameter combination and the machining performance prediction value obtained in step 6, an actual planar vertical milling process.

Step 3 specifically includes:
an objective function model for machining efficiency: ${T}_{total} = {t}_{standby} + {t}_{sra}^{r} + {t}_{unload}^{r} + {t}_{cutting}^{r} + {t}_{sra}^{f} + {t}_{unload}^{f} + {t}_{cutting}^{f} + {t}_{aux}$

In the formula, *Tₜₒₜₐₗ* is total time consumption (unit: second) of the planar vertical milling process considering the multiple machining stages; *t_{standby}* is pure standby time (unit: second) of the machine tool in the process of machining preparation and workpiece clamping; ${t}_{sra}^{r}$ and ${t}_{sra}^{f}$ are spindle acceleration times (unit: second) at the rough milling stage and the finish milling stage, respectively; ${t}_{unload}^{r}$ and ${t}_{unload}^{f}$ are idle times (unit: second) at the rough milling stage and the finish milling stage, respectively; ${t}_{cutting}^{r}$ and ${t}_{cutting}^{f}$ are material cutting times (unit: second) at the rough milling stage and the finish milling stage, respectively; and *tₐᵤₓ* is auxiliary time consumption (unit: second) of the planar vertical milling process considering the multiple machining stages.
an objective function model for machining energy consumption: ${E}_{total} = {E}_{standby} + {E}_{sra}^{r} + {E}_{unload}^{r} + {E}_{cutting}^{r} + {E}_{sra}^{f} + {E}_{unload}^{f} + {E}_{cutting}^{f} + {E}_{aux} .$

In the formula, *Eₜₒₜₐₗ* is total energy consumption (unit: Joule) of the planar vertical milling process considering the multiple machining stages; *E_{standby}* is pure standby energy consumption (unit: Joule) of the machine tool in the process of machining preparation and workpiece clamping; ${E}_{sra}^{r}$ and ${E}_{sra}^{f}$ are spindle acceleration energy consumptions (unit: Joule) at the rough milling stage and the finish milling stage, respectively; ${E}_{unload}^{r}$ and ${E}_{unload}^{f}$ are idle energy consumptions (unit: Joule) at the rough milling stage and the finish milling stage, respectively; ${E}_{cutting}^{r}$ and ${E}_{cutting}^{f}$ are material cutting energy consumptions (unit: Joule) at the rough milling stage and the finish milling stage, respectively; and *Eₐᵤₓ* is auxiliary energy consumption (unit: Joule) of the planar vertical milling process considering the multiple machining stages.
an objective function model for machining quality: ${R}_{a} = {k}_{a} \times {\left({n}^{f}\right)}^{{α}_{a}} \times {\left({f}^{f}\right)}^{{β}_{a}} \times {\left({a}_{p}^{f}\right)}^{{γ}_{a}} \times {\left({a}_{e}^{f}\right)}^{{δ}_{a}} .$

In the formula, *Rₐ* is surface roughness (unit: µm) of a workpiece; *kₐ* is a correction coefficient, the magnitude of which depends on workpiece material; *n^{f}* is a spindle speed (unit: r/min) at the finish milling stage; *f ^{f}* is a feed (unit: mm/r) at the finish milling stage; ${a}_{p}^{f}$ is a milling depth (unit: mm) at the finish milling stage; ${a}_{e}^{f}$ is a milling width (unit: mm) at the finish milling stage; and *αₐ , βₐ , γₐ ,* and *δₐ* are exponents in the formula. Moreover, *αₐ , βₐ , γₐ* and *δₐ* can be obtained by experimental analysis combined with a statistical method.

The constraint conditions in step 4 include spindle speed constraint, feed constraint, feed speed constraint, milling depth constraint, milling width constraint, machine tool spindle rated power constraint, and tool life constraint.

The spindle speed constraint is: ${n}_{min}^{r} \leq {n}^{r} \leq {n}_{max}^{r} , {n}_{min}^{f} \leq {n}^{f} \leq {n}_{max}^{f}$.

In the formula, ${n}_{min}^{r}$ and ${n}_{max}^{r}$ are a lowest rated speed and a highest rated speed (unit: r/min) of a spindle allowed by the machine tool at the rough milling stage, respectively; and ${n}_{min}^{f}$ and ${n}_{max}^{f}$ are a lowest rated speed and a highest rated speed (unit: r/min) of the spindle allowed by the machine tool at the finish milling stage, respectively.

The feed constraint is: ${f}_{min}^{r} \leq {f}^{r} \leq {f}_{max}^{r} , {f}_{min}^{f} \leq {f}^{f} \leq {f}_{max}^{f}$.

In the formula, ${f}_{min}^{r}$ and ${f}_{max}^{r}$ are a minimum feed and a maximum feed (unit: mm/r) allowed by the machine tool at the rough milling stage, respectively; and ${f}_{min}^{f}$ and ${f}_{max}^{f}$ are a minimum feed and a maximum feed (unit: mm/r) allowed by the machine tool at the finish milling stage, respectively.

The feed speed constraint is: ${ν}_{f _ min}^{r} \leq {ν}_{f}^{r} \leq {ν}_{f _ max}^{r} , {ν}_{f _ min}^{f} \leq {ν}_{f}^{f} \leq {ν}_{f _ max}^{f}$.

In the formula, ${ν}_{f}^{r}$ and ${ν}_{f}^{f}$ are feed speeds (unit: mm/min) at the rough milling stage and the finish milling stage, respectively; ${ν}_{f _ min}^{r}$ and ${ν}_{f _ max}^{r}$ are a minimum feed speed and a maximum feed speed (unit: mm/min) allowed by the machine tool at the rough milling stage, respectively; and ${ν}_{f _ min}^{f}$ and ${ν}_{f _ max}^{f}$ are a minimum feed speed and a maximum feed speed (unit: mm/min) allowed by the machine tool at the finish milling stage respectively.

The milling depth constraint is: ${a}_{p _ min}^{r} \leq {a}_{p}^{r} \leq {a}_{p _ max}^{r} , {a}_{p _ min}^{f} \leq {a}_{p}^{f} \leq {a}_{p _ max}^{f}$.

In the formula, ${a}_{p _ min}^{r}$ and ${a}_{p _ max}^{r}$ are a minimum milling depth and a maximum milling depth (unit: mm) allowed at the rough milling stage, respectively; and ${a}_{p _ min}^{f}$ and ${a}_{p _ max}^{f}$ are a minimum milling depth and a maximum milling depth (unit: mm) allowed at the finish milling stage, respectively.

The milling width constraint is: ${a}_{e _ min}^{r} \leq {a}_{e}^{r} \leq {a}_{e _ max}^{r} , {a}_{e _ min}^{f} \leq {a}_{e}^{f} \leq {a}_{e _ max}^{f}$.

In the formula, ${a}_{e _ min}^{r}$ and ${a}_{e _ max}^{r}$ are a minimum milling width and a maximum milling width (unit: mm) allowed at the rough milling stage, respectively; and ${a}_{e _ min}^{f}$ and ${a}_{e _ max}^{f}$ are a minimum milling width and a maximum milling width (unit: mm) allowed at the finish milling stage, respectively.

The machine tool spindle rated power constraint is: $\frac{{P}_{spindle} + {P}_{remove}}{η} \leq {P}_{max}$.

In the formula, *P_{spindle}* is rotational power (unit: W) of the spindle of the machine tool; *Pᵣₑₘₒᵥₑ* is a material removal power (vertical milling power) (unit: W); *η* is a transmission efficiency of the spindle of the machine tool; and *P*ₘₐₓ is a rated power (unit: W) of a spindle motor of the machine tool.

The tool life constraint: *T_{toollife}* ≥ *T_{economiclife}.*

In the formula, *T_{toollife}* is a tool life (unit: min); and *T_{economiclife}* is a minimum economic life (unit: min) of the cutting tool.

To-be-machined plane dimension feature constraints are: ${H}_{P} = \left(k-1\right) {a}_{p}^{r} + {a}_{p}^{f}$*,* ${W}_{P} = \left({m}^{r}-1\right) {a}_{e}^{r} + {Δ}_{w}^{r}$ and ${W}_{P} = \left({m}^{f}-1\right) {a}_{e}^{f} + {Δ}_{w}^{f}$;

In the formula, *H_{P}* is a height dimension feature (unit: mm) of the to-be-machined plane; *k* is the number of milled layers in the whole process of numerical control planar vertical milling; *Wₚ* is a width dimension feature (unit: mm) of the to-be-machined plane; *m^{r}* and *m^{f}* are the numbers of radial feeds of the cutting tool at the rough milling stage and the finish milling stage, respectively; and ${Δ}_{w}^{r}$ and ${Δ}_{w}^{f}$ are radial machining allowances (unit: mm) of the cutting tool at the rough milling stage and the finish milling stage, respectively.

The multi-objective optimization mathematical model for planar vertical milling process parameters is: $min F \left({n}^{r}, {f}^{r}, {a}_{p}^{r}, {a}_{e}^{r}, {n}^{f}, {f}^{f}, {a}_{p}^{f}, {a}_{e}^{f}\right) = \left({minT}_{total}, {minE}_{total}, {minR}_{a}\right)$ $s . t . \left\{\begin{matrix}{n}_{min}^{r} \leq {n}^{r} \leq {n}_{max}^{r} \\ {n}_{min}^{f} \leq {n}^{f} \leq {n}_{max}^{f} \\ {f}_{min}^{r} \leq {f}^{r} \leq {f}_{max}^{r} \\ {f}_{min}^{f} \leq {f}^{f} \leq {f}_{max}^{f} \\ {ν}_{f _ min}^{r} \leq {ν}_{f}^{r} \leq {ν}_{f _ max}^{r} \\ {ν}_{f _ min}^{f} \leq {ν}_{f}^{f} \leq {ν}_{f _ max}^{f} \\ {a}_{p _ min}^{r} \leq {a}_{p}^{r} \leq {a}_{p _ max}^{r} \\ {a}_{p _ min}^{f} \leq {a}_{p}^{f} \leq {a}_{p _ max}^{f} \\ {a}_{e _ min}^{r} \leq {a}_{e}^{r} \leq {a}_{e _ max}^{r} \\ {a}_{e _ min}^{f} \leq {a}_{e}^{f} \leq {a}_{e _ max}^{f} \\ \frac{{P}_{spindle} + {P}_{remove}}{η} \leq {P}_{max} \\ {T}_{toollife} \geq {T}_{economiclife} \\ {H}_{P} = \left(k-1\right) {a}_{p}^{r} + {a}_{p}^{f} \\ {W}_{P} = \left({m}^{r}-1\right) {a}_{e}^{r} + {Δ}_{w}^{r} \\ {W}_{P} = \left({m}^{f}-1\right) {a}_{e}^{f} + {Δ}_{w}^{f}\end{matrix}\right. ;$

A generalized Taylor tool life formula is adopted at the tool life formula: ${T}_{toollife} = \frac{{C}_{T}}{{n}^{{α}_{t}} \times {{ν}_{f}}^{{β}_{t}} \times {{a}_{p}}^{{γ}_{t}} \times {{a}_{e}}^{{δ}_{t}}}$

In the formula, *C_{T}* is a constant term of the tool life formula, the value of which is related to the cutting tool and the workpiece material; *n* is a spindle speed (unit: r/min); *v_{f}* is a feed speed (unit: mm/min); *f* is a feed (unit: mm/r); *aₚ* is a milling depth (unit: mm); *aₑ* is a milling width (unit: mm); and *αₜ , βₜ, γₜ* and *δₜ* are formula correlation coefficients.

Step 6 specifically includes:
obtaining, according to the multi-objective optimization mathematical model for planar vertical milling process parameters established in Step 5, values of corresponding *n^{r}, f^{r} ,* ${a}_{p}^{r}$, ${a}_{e}^{r}$, *n^{f}, f^{f} ,* ${a}_{p}^{f}$, ${a}_{e}^{f}$ when $min F \left({n}^{r}, {f}^{r}, {a}_{p}^{r}, {a}_{e}^{r}, {n}^{f}, {f}^{f}, {a}_{p}^{f}, {a}_{e}^{f}\right)$.

When solving the multi-objective optimization mathematical model, some representative optimization algorithms for processing multi-objective optimization models, such as particle swarm optimization, genetic algorithm and artificial bee colony algorithm, can be adopted. These algorithms are characterized by generating multiple points and searching in multiple directions, very suitable for dealing with process parameter optimization as a multi-objective optimization problem where the optimal solution search space is very complex.

The present invention has the following beneficial effects:
The conventional planar vertical milling process parameter optimization is local optimization oriented to a single rough milling process or finish milling process, and machining allowances used in the process of optimization are often machining allowances specified by enterprises. In the present invention, the rough milling stage and the finish milling stage are regarded as a whole for global optimization, so that an optimization result is more applicable. In addition, the present invention considers the life of the cutting tool when dealing with the constraint conditions, so that the optimization result has more practical significance. The present invention solves the problems of low machining efficiency, great energy consumption and poor machining quality caused by improper selection of process parameters in the planar vertical milling process, and the problem that a process parameter optimization result at a single machining stage is not applicable.

### BRIEF DESCRIPTION OF THE DRAWINGS

FIG 1 is a schematic diagram of planar vertical milling considering multiple machining stages.
FIG 2 is a schematic flow chart of a method according to the present invention.
FIG 3 is a planar vertical milling part drawing considering multiple machining stages in Embodiment 1.
FIG 3 (a) is a feed path drawing at a rough milling stage of a workpiece, with the upper drawing in FIG 3 (a) being a top view of the workpiece at the rough milling stage and the lower drawing in FIG 3 (a) being the front view of the workpiece at the rough milling stage; and FIG 3 (b) is a feed path drawing at a finish milling stage of the workpiece, with the upper drawing in FIG. 3 (b) being a top view of the workpiece at the finish milling stage and the lower drawing in FIG 3 (b) being a front view of the workpiece at the finish milling stage.

In the drawings: 1. cutting tool; 2. feed path; 3. to-be-machined plane; 4. material removed at the rough milling stage; 5. material removed at the finish milling stage.

### DETAILED DESCRIPTION

The specific embodiments of the present invention are described below in further detail with reference to the accompanying drawings and specific implementations.

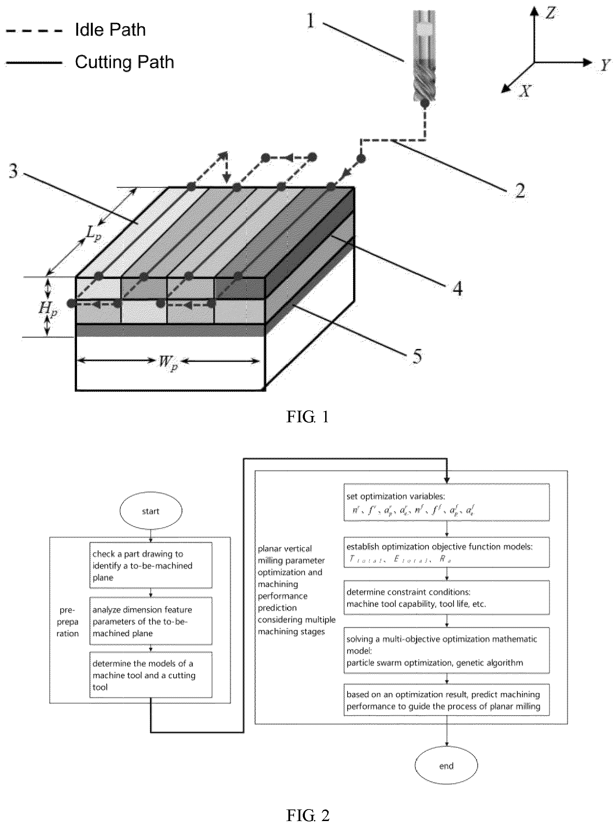

FIG 1 is a schematic diagram of planar vertical milling considering multiple machining stages. The global planar vertical milling process parameter optimization problem considering multiple machining stages may be described as follows: based on the dimension feature parameters of the to-be-machined plane (length dimension feature *Lₚ,* width dimension feature *Wₚ* and height dimension feature *Hₚ*), regarding the rough milling stage and the finish milling stage as a whole, the optimal process parameter combination (rough milling spindle speed *n^{r},* rough milling feed *f^{r},* rough milling depth ${a}_{p}^{r}$, rough milling width ${a}_{e}^{r}$, finish milling spindle speed *n^{f},* finish milling feed *f ^{f} ,* finish milling depth ${a}_{p}^{f}$ and finish milling width ${a}_{e}^{f}$) is selected for the whole rough milling and finish milling process of a numerical control machine tool, and an appropriate milled layer number *k* is planned, so as to ensure that a final machining scheme can comprehensively make three objectives (i.e. machining efficiency, machining energy consumption and machining quality) optimal under the various complex constraint conditions (machine tool capacity, tool life, technical requirements of machining, etc.).

According to Embodiment 1, referring to FIGs. 1 to 3, a planar vertical milling parameter optimization and machining performance prediction method considering multiple machining stages includes the following steps:
Step 1: making preparation: A part drawing is checked to identify a to-be-machined plane, dimension feature parameters (length dimension feature *Lₚ ,* width dimension feature *Wₚ* and height dimension feature *Hₚ*) of the to-be-machined plane are analyzed, and the models of a machine tool and a cutting tool are determined, so that a machining process is obtained.

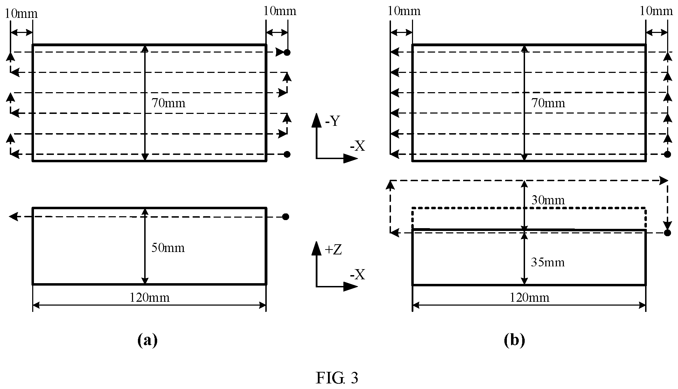

Specifically, as shown in FIG 3, the dimensions of a workpiece are 120 mm × 70 mm × 50 mm, and the workpiece is made into a cuboid flat strip with dimensions of 120 mm × 70 mm × 35 mm; and the dimension feature parameters of the to-be-machined plane can be obtained by analysis: *Lₚ* =120mm, *Wₚ* = 70mm, and *Hₚ* =15mm.

In the present embodiment, an XHK-714F vertical machining center and a W400F-FS coated tungsten steel cutting tool are selected.

The specific machining process may be described as follows: during rough milling, the milling cutting tool is first quickly fed to the to-be-machined plane from an initial position, and then goes down for a distance ${a}_{p}^{r}$ along the -Z axis, and a spindle is then rotated at a rotational speed *n^{r} ,* and at the same time, cutting is performed by 140 mm along the +X axis at a cutting feed speed ${ν}_{f}^{r}$, completing first feed; subsequently, the milling cutting tool moves along the -Y axis for a distance of cutting width ${a}_{e}^{r}$ at the same cutting feed speed ${ν}_{f}^{r}$, and then performs cutting by 140 mm along the -X axis at the same cutting feed speed ${ν}_{f}^{r}$ again, completing second feed; and the above steps are repeated until the milling of the first layer is completed. Subsequently, the milling cutting tool goes down for a distance $2 \times {a}_{p}^{r}$ along the -Z axis, and the above steps are repeated again until the milling of the second layer, the third layer ... the *k*-1th layer is completed. After rough milling is completed, the milling tool goes down for a distance ${a}_{p}^{f}$ along the -Z axis again to enter the finish milling stage, and at the same time, the feed mode is changed. The spindle is rotated at a rotational speed *n^{f}* , climb milling is performed, and at the same time, cutting is performed by 140 mm along the +X axis at a cutting feed speed ${ν}_{f}^{f}$, and subsequently, the milling tool is quickly vertically fed upwards for 30 mm along the +Z axis, quickly fed again for 140 mm along the -X axis and quickly fed again for 30 mm along the -Z axis in sequence, completing first feed. Subsequently, the milling tool moves for a distance of cutting width ${a}_{e}^{f}$ along the -Y axis at the same cutting feed speed ${ν}_{f}^{f}$, and then performs cutting by 140 mm along the -X axis at the same cutting feed speed ${ν}_{f}^{f}$ again, completing second feed; and the above steps are repeated until the finish milling stage is completed.

Step 2: setting optimization variables: spindle speed *n^{r},* feed *f^{r},* milling depth ${a}_{p}^{r}$ and milling width ${a}_{e}^{r}$ at a rough milling stage and spindle speed *n^{f} ,* feed *f ^{f} ,* milling depth ${a}_{p}^{f}$ and milling width ${a}_{e}^{f}$ at a finish milling stage are set as optimization variables.

Step 3: selecting optimization objectives: machining efficiency, machining energy consumption and machining quality.

Specifically, an objective function model for machining efficiency may be expressed as: ${T}_{total} = {t}_{standby} + {t}_{sra}^{r} + {t}_{unload}^{r} + {t}_{cutting}^{r} + {t}_{sra}^{f} + {t}_{unload}^{f} + {t}_{cutting}^{f} + {t}_{aux} .$

In the formula, *Tₜₒₜₐₗ* is total time consumption (unit: second) of the planar vertical milling process considering the multiple machining stages; *t_{standby}* is pure standby time (unit: second) of the machine tool in the process of machining preparation and workpiece clamping; ${t}_{sra}^{r}$ and ${t}_{sra}^{f}$ are spindle acceleration times (unit: second) at the rough milling stage and the finish milling stage, respectively; ${t}_{unload}^{r}$ and ${t}_{unload}^{f}$ are idle times (unit: second) at the rough milling stage and the finish milling stage, respectively; ${t}_{cutting}^{r}$ and ${t}_{cutting}^{f}$ are material cutting times (unit: second) at the rough milling stage and the finish milling stage, respectively; and *fₐᵤₓ* is auxiliary time consumption (unit: second) of the planar vertical milling process considering the multiple machining stages.

For planar vertical milling considering the multiple machining stages, the pure standby time of the machine tool in the process of machining preparation and workpiece clamping is shared by all the machining stages. In the present embodiment, the pure standby time of the machine tool is *t_{standby}* =1min =60s .

The spindle acceleration time at the rough milling stage is ${t}_{sra}^{r} = 1.00 \times {10}^{- 4} \times {n}^{r}$; and the spindle acceleration time at the finish milling stage is ${t}_{sra}^{f} = 1.00 \times {10}^{- 4} \left|{n}^{f}-{n}^{r}\right|$.

The idle time (idling of the spindle and idle feed motion of a feed shaft) ${t}_{unload}^{r}$ at the rough milling stage is calculated as: $\begin{matrix}{t}_{unload}^{r} = \frac{60 \times {L}_{f _ X}^{r}}{{ν}_{f _ X}^{r}} + \frac{60 \times {L}_{f _ Y}^{r}}{{ν}_{f _ Y}^{r}} + \frac{60 \times {L}_{f _ Z}^{r}}{{ν}_{f _ Z}^{r}} \\ = 60 \times \frac{\left(10+10\right)}{{n}^{r} \times {f}^{r}} \times \left⌈\frac{70}{{a}_{e}^{r}}\right⌉ \times \left(\frac{15 - {a}_{p}^{f}}{{a}_{p}^{r}}\right) + 60 \times \frac{10}{{n}^{r} \times {f}^{r}} \times \left(\frac{15 - {a}_{p}^{f}}{{a}_{p}^{r}}\right) + 60 \times \frac{15}{{n}^{r} \times {f}^{r}} .\end{matrix}$

In the formula, ┌ ┐ represents rounding up; ${L}_{f _ X}^{r} , {L}_{f _ Y}^{r}$ and ${L}_{f _ Z}^{r}$ represent feed distances (unit: mm) in the X-axis, Y-axis, and Z-axis directions at the rough milling stage, respectively; and ${ν}_{f _ X}^{r} , {ν}_{f _ Y}^{r}$ and ${ν}_{f _ Z}^{r}$ represent feed speeds (unit: mm/min) in the X-axis, Y-axis and Z-axis directions at the rough milling stage, respectively.

The idle time (idling of the spindle, idle feed motion of the feed shaft and rapid feed motion of the feed shaft) ${t}_{unload}^{f}$ at the finish milling stage is calculated as: $\begin{matrix}{t}_{unload}^{f} = \frac{60 \times {L}_{f _ X}^{f}}{{ν}_{f _ X}^{f}} + \frac{60 \times {L}_{f _ Y}^{f}}{{ν}_{f _ Y}^{f}} + \frac{60 \times {L}_{f _ Xquik}^{f}}{{ν}_{f _ Xquik}^{f}} + \frac{60 \times {L}_{f _ ZUquik}^{f}}{{ν}_{f _ ZUquik}^{f}} + \frac{60 \times {L}_{f _ ZDquik}^{f}}{{ν}_{f _ ZDquik}^{f}} \\ = 60 \times \frac{\left(10+10\right)}{{n}^{f} \times {f}^{f}} \times \left⌈\frac{70}{{a}_{e}^{f}}\right⌉ + 60 \times \frac{70}{{n}^{f} \times {f}^{f}} + 60 \times \frac{140}{{ν}_{f _ Xquik}^{f}} \times \left⌈\frac{70}{{a}_{e}^{f}}\right⌉ \\ + 60 \times \frac{30}{{ν}_{f _ ZUquik}^{f}} \times \left⌈\frac{70}{{a}_{e}^{f}}\right⌉ + 60 \times \frac{30}{{ν}_{f _ ZDquik}^{f}} \times \left⌈\frac{70}{{a}_{e}^{f}}\right⌉ .\end{matrix}$

In the formula, ${L}_{f _ X}^{f}$ and ${L}_{f _ Y}^{f}$ represent feed distances (unit: mm) in the X-axis and Y-axis directions at the finish milling stage, respectively; ${ν}_{f _ X}^{f}$ and ${ν}_{f _ Y}^{f}$ represent feed speeds (unit: mm/min) in the X-axis and Y-axis directions at the finish milling stage, respectively; ${L}_{f _ Xquik}^{f}$, ${L}_{f _ ZUquik}^{f}$ and ${L}_{f _ ZDquik}^{f}$ represent rapid feed distances (unit: mm) in the X-axis and Z-axis upward directions and the Z-axis downward direction at the finish milling stage, respectively; ${ν}_{f _ Xquik}^{r}$*,* ${ν}_{f _ ZUquik}^{r}$ and ${ν}_{f _ ZDquik}^{r}$ represent rapid feed speeds (unit: mm/min) in the X-axis and Z-axis upward directions and the Z-axis downward direction at the finish milling stage, respectively; and in addition, in order to reduce programming load for technologists and increase the efficiency of machining, given rapid feed speeds are adopted in the present embodiment, where ${ν}_{f _ Xquik}^{r} = 800 mm / min , {ν}_{f _ ZUquik}^{r} = 600 mm / min$ and ${ν}_{f _ ZDquik}^{r} = 600 mm / min$.

The cutting time ${t}_{cutting}^{r}$ at the rough milling stage is calculated as: ${t}_{cutting}^{r} = 60 \times \frac{{V}_{remove}^{r}}{{n}^{r} \times {f}^{r} \times {a}_{p}^{r} \times {a}_{e}^{r}} = 60 \times \frac{120 \times 70 \times \left(15-{a}_{p}^{f}\right)}{{n}^{r} \times {f}^{r} \times {a}_{p}^{r} \times {a}_{e}^{r}} .$

In the formula, ${V}_{remove}^{r}$ is a removed material volume (unit: mm³) at the rough milling stage.

The cutting time ${t}_{cutting}^{f}$ at the finish milling stage is calculated as: ${t}_{cutting}^{f} = 60 \times \frac{{V}_{remove}^{f}}{{n}^{f} \times {f}^{f} \times {a}_{p}^{f} \times {a}_{e}^{f}} = 60 \times \frac{120 \times 70 \times {a}_{p}^{f}}{{n}^{f} \times {f}^{f} \times {a}_{p}^{f} \times {a}_{e}^{f}} .$

In the formula, ${V}_{remove}^{f}$ is a removed material volume (unit: mm³) at the finish milling stage.

For planar vertical milling considering the multiple machining stages, the auxiliary time consumption *fₐᵤₓ* mainly includes two parts: one is automatic tool changing time consumption *t_{toolchannge}* in the process of machining; and the other is auxiliary time consumption *t_{toolchange_wear}* in a case where the tool of the machine tool needs to be changed due to tool wear in the process of machining.

In the present embodiment, the automatic tool changing time consumption in the auxiliary time may be calculated as: ${t}_{toolchange} = 16.7 + 1.08 \times Δ pos = 16.7 + 1.08 \times 4 = 21.02 s .$

In the formula, Δ*pos* is the number of tool positions rotated by a tool rest of the machine tool, Δ*pos = 4,* that is, the number of tool positions rotated by the tool rest of the machine tool in the present embodiment is 4.

In the auxiliary time, when the tool of the machine tool needs to be changed manually due to tool wear, the consumed time may be calculated as: $\begin{matrix}{t}_{toolchange _ wear} = 60 \times 2 \times \frac{120 \times 70 \times \left(15-{a}_{p}^{f}\right)}{{n}^{r} \times {f}^{r} \times {a}_{p}^{r} \times {a}_{e}^{r}} \times \frac{{\left({n}^{r}\right)}^{1.786} \times {\left({f}^{r}\right)}^{0.211} \times {\left({a}_{p}^{r}\right)}^{0.450} \times {\left({a}_{e}^{r}\right)}^{0.150}}{{e}^{17.287}} \\ + 60 \times 2 \times \frac{120 \times 70 \times {a}_{p}^{f}}{{n}^{f} \times {f}^{f} \times {a}_{p}^{f} \times {a}_{e}^{f}} \times \frac{{\left({n}^{f}\right)}^{1.786} \times {\left({f}^{f}\right)}^{0.211} \times {\left({a}_{p}^{f}\right)}^{0.450} \times {\left({a}_{e}^{f}\right)}^{0.150}}{{e}^{17.287}} .\end{matrix}$

In the formula, *t_{toolchange_wear}* is the time (unit: second) consumed by the manual tool changing required by the machine tool allocated into the machining process of the present embodiment in this patent.

In the present embodiment, the objective function model for machining efficiency may be further expressed in detail as: $\begin{matrix}{T}_{total} = {t}_{standby} + {t}_{sra}^{r} + {t}_{unload}^{r} + {t}_{cutting}^{r} + {t}_{sra}^{f} + {t}_{unload}^{f} + {t}_{cutting}^{f} + {t}_{aux} \\ = {t}_{standby} + {t}_{sra}^{r} + {t}_{unload}^{r} + {t}_{cutting}^{r} + {t}_{sra}^{f} + {t}_{unload}^{f} + {t}_{cutting}^{f} + {t}_{toolchange} + {t}_{toolchange _ wear} \\ = \left[\begin{matrix}60 + 1.00 \times {10}^{- 4} \times {n}^{r} + 1.00 \times {10}^{- 4} \left|{n}^{f}-{n}^{r}\right| + \\ 60 \times \left(\frac{10 + 10}{{n}^{r} \times {f}^{r}}\times \left⌈\frac{70}{{a}_{e}^{r}}\right⌉\times \left(\frac{15 - {a}_{p}^{f}}{{a}_{p}^{r}}\right)+\frac{70}{{n}^{r} \times {f}^{r}}\times \left(\frac{15 - {a}_{p}^{f}}{{a}_{p}^{r}}\right)+\frac{15}{{n}^{r} \times {f}^{r}}\right) + \\ 60 \times \left(\frac{\left(10+10\right)}{{n}^{f} \times {f}^{f}}\times \left⌈\frac{70}{{a}_{e}^{f}}\right⌉+\frac{70}{{n}^{f} \times {f}^{f}}+\left⌈\frac{70}{{a}_{e}^{f}}\right⌉\times \left(\frac{140}{{ν}_{f _ Xquik}^{f}}+\frac{30}{{ν}_{f _ ZUquik}^{f}}+\frac{30}{{ν}_{f _ ZDquik}^{f}}\right)+\right. \\ 60 \times \left(\frac{120 \times 70 \times \left(15-{a}_{p}^{f}\right)}{{n}^{r} \times {f}^{r} \times {a}_{p}^{r} \times {a}_{e}^{r}}+\frac{120 \times 70 \times {a}_{p}^{f}}{{n}^{f} \times {f}^{f} \times {a}_{p}^{f} \times {a}_{e}^{f}}\right) + 16.7 + 1.08 \times 4 + \\ 60 \times 2 \times \frac{120 \times 70 \times \left(15-{a}_{p}^{f}\right)}{{n}^{r} \times {f}^{r} \times {a}_{p}^{r} \times {a}_{e}^{r}} \times \frac{{\left({n}^{r}\right)}^{1.786} \times {\left({f}^{r}\right)}^{0.211} \times {\left({a}_{p}^{r}\right)}^{0.450} \times {\left({a}_{e}^{r}\right)}^{0.150}}{{e}^{17.287}} + \\ 60 \times 2 \times \frac{120 \times 70 \times {a}_{p}^{f}}{{n}^{f} \times {f}^{f} \times {a}_{p}^{f} \times {a}_{e}^{f}} \times \frac{{\left({n}^{f}\right)}^{1.786} \times {\left({f}^{f}\right)}^{0.211} \times {\left({a}_{p}^{f}\right)}^{0.450} \times {\left({a}_{e}^{f}\right)}^{0.150}}{{e}^{17.287}}\end{matrix}\right] .\end{matrix}$

An objective function model for machining energy consumption may be expressed as: ${E}_{total} = {E}_{standby} + {E}_{sra}^{r} + {E}_{unload}^{r} + {E}_{cutting}^{r} + {E}_{sra}^{f} + {E}_{unload}^{f} + {E}_{cutting}^{f} + {E}_{aux} .$

In the formula, *Eₜₒₜₐₗ* is total energy consumption (unit: Joule) of the planar vertical milling process considering the multiple machining stages; *E_{standby}* is pure standby energy consumption (unit: Joule) of the machine tool in the process of machining preparation and workpiece clamping; ${E}_{sra}^{r}$ and ${E}_{sra}^{f}$ are spindle acceleration energy consumptions (unit: Joule) at the rough milling stage and the finish milling stage, respectively; ${E}_{unload}^{r}$ and ${E}_{unload}^{f}$ are idle energy consumptions (unit: Joule) at the rough milling stage and the finish milling stage, respectively; ${E}_{cutting}^{r}$ and ${E}_{cutting}^{f}$ are material cutting energy consumptions (unit: Joule) at the rough milling stage and the finish milling stage, respectively; and *Eₐᵤₓ* is auxiliary energy consumption (unit: Joule) of the planar vertical milling process considering the multiple machining stages.

The energy consumption in the process of numerical control machining is equal to the integration of power over time, so the objective function model for machining energy consumption may be more specifically expressed as: $\begin{matrix}{E}_{total} = {E}_{standby} + {E}_{sra}^{r} + {E}_{unload}^{r} + {E}_{cutting}^{r} + {E}_{sra}^{f} + {E}_{unload}^{f} + {E}_{cutting}^{f} + {E}_{aux} \\ = {\int }_{0}^{{t}_{standby}} {P}_{standby} dt + {\int }_{0}^{{t}_{sra}^{r}} \left({P}_{standby}+{P}_{sra}\right) dt + {\int }_{0}^{{t}_{unload}^{r}} \left({P}_{standby}+{P}_{spindle}+{P}_{feed}\right) dt \\ + {\int }_{0}^{{t}_{cutting}^{r}} \left({P}_{standby}+{P}_{spindle}+{P}_{feed}+{P}_{remove}+{P}_{spraycool}\right) dt + {\int }_{0}^{{t}_{sra}^{f}} \left({P}_{standby}+{P}_{sra}\right) dt \\ + {\int }_{0}^{{t}_{unload}^{f}} \left({P}_{standby}+{P}_{spindle}+{P}_{feed}+{P}_{rfd}\right) dt + {\int }_{0}^{{t}_{cutting}^{f}} \left({P}_{standby}+{P}_{spindle}+{P}_{feed}+{P}_{remove}+{P}_{spraycool}\right) dt \\ + {\int }_{0}^{{t}_{toolchange}} \left({P}_{standby}+{P}_{toolchange}\right) dt + {\int }_{0}^{{t}_{toolchange _ wear}} \left({P}_{standby}\right) dt .\end{matrix}$

In the formula, *P_{standby}* is standby power of the machine tool (unit: W); *Pₛᵣₐ* is rotational acceleration power of the spindle of the machine tool (unit: W); *P_{spindle}* is rotational power of the spindle of the machine tool (unit: W); *P_{feed}* is feed power of the machine tool (unit: W); *Pᵣₑₘₒᵥₑ* is material removal power (milling power) (unit: W); *P_{spraycool}* is cutting fluid spraying power of the machine tool (unit: W); *P_{rfd}* is rapid feed power of the machine tool (unit: W); and *P_{toolchange}* is automatic tool changing power of the machine tool (unit: W).

In the present embodiment, a power function model of each sub-process in the planar vertical milling process is shown in Table 1.

**Table 1: Power Function Model of Each Sub-process in Planar Vertical Milling Process**

| machining process | power model |
|---|---|
| machine tool standby | ${P}_{standby} = {\sum }_{i = 1}^{100} {P}_{standby _ i} / 100 = 371.0$ |
| cutting fluid spraying | ${P}_{spraycool} = {\sum }_{i = 1}^{100} \left({P}_{spraycool _ i}-{P}_{standby}\right) / 100 = 233.0$ |
| spindle rotation | ${P}_{spindle} = \left\{\begin{matrix}0.086 n + 14.76 & \left(0<n<2200 r/min\right) & \left({R}^{2}=0.9987\right) \\ 0.0186 n + 164.97 & \left(2200<n<300 r/min\right) & \left({R}^{2}=0.9790\right) \\ 0.0522 n + 61.62 & \left(3000<n<4200 r/min\right) & \left({R}^{2}=0.9835\right)\end{matrix}\right.$ |
| | ${P}_{feed _ X} = 5 \times {10}^{- 7} \times {ν}_{f _ X}^{2} + 0.0491 \times {ν}_{f _ X} \left({R}^{2}=0.9961\right)$ |
| feed motion | ${P}_{feed _ Y} = - 1 \times {10}^{- 6} \times {ν}_{f _ Y}^{2} + 0.043 \times {ν}_{f _ Y} \left({R}^{2}=0.9794\right)$ |
| | ${P}_{feed _ ZU} = - 5 \times {10}^{- 7} \times {ν}_{f _ ZU}^{2} + 0.059 \times {ν}_{f _ ZU} \left({R}^{2}=0.9958\right)$ |
| | ${P}_{feed _ ZD} = - 1 \times {10}^{- 7} \times {ν}_{f _ ZD}^{2} + 0.0461 \times {ν}_{f _ ZD} \left({R}^{2}=0.9948\right)$ |
| material removal (vertical milling) | ${P}_{remove} = 0.080 {n}^{0.932} \times {f}^{0.788} \times {a}_{p}^{0.937} \times {a}_{e}^{1.002} \left({R}^{2}=0.9973\right)$ |
| spindle rotation acceleration | *Pₛᵣₐ* = *P_{spindle}* (*n*₁ + 1 0000*t*) + 6.505*n*₁ + 65049.7*t* (*R*² = 0.9946) |
| | ${P}_{rfd _ X} = {\sum }_{i = 1}^{100} \left({P}_{rfd _ X _ i}-{P}_{standby}\right) / 100 = 855.8$ |
| rapid feed | ${P}_{rfd _ Y} = {\sum }_{i = 1}^{100} \left({P}_{rfd _ Y _ i}-{P}_{standby}\right) / 100 = 504.9$ |
| | ${P}_{rfd _ ZU} = {\sum }_{i = 1}^{100} \left({P}_{rfd _ ZU _ i}-{P}_{standby}\right) / 100 = 659.1$ |
| | ${P}_{rfd _ ZD} = {\sum }_{i = 1}^{100} \left({P}_{rfd _ ZD _ i}-{P}_{standby}\right) / 100 = 573.4$ |
| automatic tool changing | ${P}_{toolchange} = {\sum }_{i = 1}^{100} \left({P}_{toolchange _ i}-{P}_{standby}\right) / 100 = 84.8$ |

In Table 1, *P_{standby_i}* is an ith collected standby power value (unit: W) of the machine tool; *P_{spraycool_i}* is an ith collected cutting fluid spraying power value (including standby power of the machine tool) (unit: W); *P_{feed_X}* and *P_{feed_Y}* are X-axis feed power and Y-axis feed power (unit: W) of the numerical control machine tool, respectively; *P_{feed_ZU}* and *P_{feed_ZD}* are Z-axis upward feed power and Z-axis downward feed power (unit: W) of the numerical control machine tool, respectively; *v_{f_X}* and *v_{f_Y}* are X-axis feed speed and Y-axis feed speed (unit: mm/min) of the numerical control machine tool, respectively; *v_{f_ZU}* and *v_{f_ZD}* are Z-axis upward feed speed and Z-axis downward feed speed (unit: mm/min) of the numerical control machine tool, respectively; *P_{rfd_X}* and *P_{rfd_Y}* are X-axis rapid feed power and Y-axis rapid feed power (unit: W) of the numerical control machine tool, respectively; *F_{rfd_X_i}* is an ith collected X-axis rapid feed power value (including standby power) (unit: W) of the machine tool; *P*_{*rfd*_*Y_i*} is an ith collected Y-axis rapid feed power value (including standby power) (unit: W) of the machine tool; *P_{rfd_ZU}* and *P_{rfd_ZD}* are Z-axis upward rapid feed power and Z-axis downward rapid feed power (unit: W) of the numerical control machine tool, respectively; *P_{rfd_ZU_i}* is an ith collected Z-axis upward rapid feed power value (including standby power) (unit: W) of the machine tool; *P*_{*rfd_ZD*_*i*} is an *i*th collected Z-axis downward rapid feed power value (including standby power) (unit: W) of the machine tool; and *P_{toolchange_i}* is an *i*th collected automatic tool changing power value (including standby power) (unit: W).

Further, in the present embodiment, the objective function model for machining energy consumption may be further expressed in detail as: ${E}_{total} = \left[\begin{matrix}60 \times {P}_{standby} + 1.00 \times {10}^{- 4} \times {n}^{r} \times \left({P}_{standby}+{P}_{sra}^{r}\right) + 1.00 \times {10}^{- 4} \left|{n}^{f}-{n}^{r}\right| \\ \times \left({P}_{standby}+{P}_{sra}^{f}\right) + 60 \times \frac{\left(10\times 10\right)}{{n}^{r} \times {f}^{r}} \times \left⌈\frac{70}{{a}_{e}^{r}}\right⌉ \times \left(\frac{15 - {a}_{p}^{f}}{{a}_{p}^{r}}\right) \times \left({P}_{standby}+{P}_{spindle}^{r}+{P}_{feed _ X}^{r}\right) \\ + 60 \times \frac{70}{{n}^{r} \times {f}^{r}} \times \left(\frac{15 - {a}_{p}^{f}}{{a}_{p}^{r}}\right) \times \left({P}_{standby}+{P}_{spindle}^{r}+{P}_{feed _ Y}^{r}\right) + 60 \times \frac{15}{{n}^{r} \times {f}^{r}} \\ \times \left({P}_{standby}+{P}_{spindle}^{r}+{P}_{feed _ ZD}^{r}\right) + 60 \times \frac{\left(10+10\right)}{{n}^{f} \times {f}^{f}} \times \left⌈\frac{70}{{a}_{e}^{f}}\right⌉ \times \left({P}_{standby}+{P}_{spindle}^{f}+{P}_{feed _ X}^{f}\right) \\ + 60 \times \left(\frac{70}{{n}^{f} \times {f}^{f}}\right) \times \left({P}_{standby}+{P}_{spindle}^{f}+{P}_{feed _ Y}^{f}\right) + 60 \times \frac{140}{{ν}_{f _ Xquik}^{f}} \times \left⌈\frac{70}{{a}_{e}^{f}}\right⌉ \\ \times \left({P}_{standby}+{P}_{spindle}^{f}+{P}_{rfd _ X}^{f}\right) + 60 \times \frac{30}{{ν}_{f _ ZUquik}^{f}} \times \left⌈\frac{70}{{a}_{e}^{f}}\right⌉ \times \left({P}_{standby}+{P}_{spindle}^{f}+{P}_{rfd _ ZU}^{f}\right) \\ + 60 \times \frac{30}{{ν}_{f _ ZDquik}^{f}} \times \left⌈\frac{70}{{a}_{e}^{f}}\right⌉ \times \left({P}_{standby}+{P}_{spindle}^{f}+{P}_{rfd _ ZD}^{f}\right) + 60 \times \frac{120 \times 70 \times \left(15-{a}_{p}^{f}\right)}{{n}^{r} \times {f}^{r} \times {a}_{p}^{r} \times {a}_{e}^{r}} \\ \times \left({P}_{standby}+{P}_{spindle}^{r}+{P}_{feed _ X}^{r}+{P}_{remove}^{r}+{P}_{spraycool}\right) + 60 \times \frac{120 \times 70 \times {a}_{p}^{f}}{{n}^{f} \times {f}^{f} \times {a}_{p}^{f} \times {a}_{e}^{f}} \\ \times \left({P}_{standby}+{P}_{spindle}^{f}+{P}_{feed _ X}^{f}+{P}_{remove}^{f}+{P}_{spraycool}\right) \\ + \left(16.7+1.08\times 4\right) \times \left({P}_{standby}+{P}_{toolchange}\right) + 60 \times 2 \times \left(\begin{matrix}\frac{120 \times 70 \times \left(15-{a}_{p}^{f}\right)}{{n}^{r} \times {f}^{r} \times {a}_{p}^{r} \times {a}_{e}^{r}} \\ \times \frac{{\left({n}^{r}\right)}^{1.786} \times {\left({f}^{r}\right)}^{0.211} \times {\left({a}_{p}^{r}\right)}^{0.450} \times {\left({a}_{e}^{r}\right)}^{0.150}}{{e}^{17.287}} + \frac{120 \times 70 \times {a}_{p}^{f}}{{n}^{f} \times {f}^{f} \times {a}_{p}^{f} \times {a}_{e}^{f}} \\ \times \frac{{\left({n}^{f}\right)}^{1.786} \times {\left({f}^{f}\right)}^{0.211} \times {\left({a}_{p}^{f}\right)}^{0.450} \times {\left({a}_{e}^{f}\right)}^{0.150}}{{e}^{17.287}}\end{matrix}\right) \times {P}_{standby}\end{matrix}\right] .$

In the formula, ${P}_{sra}^{r}$ and ${P}_{sra}^{f}$ are rotational acceleration powers (unit: W) of the spindle at the rough milling stage and the finish milling stage, respectively; ${P}_{spindle}^{r}$ and ${P}_{spindle}^{f}$ are rotational powers (unit: W) of the spindle at the rough milling stage and the finish milling stage, respectively; ${P}_{feed _ X}^{r} , {P}_{feed _ Y}^{r}$ and ${P}_{feed _ ZD}^{r}$ are X-axis downward feed power, Y-axis downward feed power and Z-axis downward feed power (unit: W) of the machine tool at the rough milling stage; ${P}_{feed _ X}^{f}$ and ${P}_{feed _ Y}^{f}$ are X-axis feed power and Y-axis feed power (unit: W) of the machine tool at the finish milling stage; ${P}_{rfd _ X}^{f} , {P}_{rfd _ ZU}^{f}$ and ${P}_{rfd _ ZD}^{f}$ are X-axis upward rapid feed power, Z-axis upward rapid feed power and Z-axis downward rapid feed power (unit: W) of the machine tool at the finish milling stage; and ${P}_{remove}^{r}$ and ${P}_{remove}^{f}$ are material removal powers (milling powers) (unit: W) at the rough milling stage and the finish milling stage, respectively.

The objective function model for machining quality may be expressed as: ${R}_{a} = {k}_{a} \times {\left({n}^{f}\right)}^{{α}_{a}} \times {\left({f}^{f}\right)}^{{β}_{a}} \times {\left({a}_{p}^{f}\right)}^{{γ}_{a}} \times {\left({a}_{e}^{f}\right)}^{{δ}_{a}} .$

In the formula, *Rₐ* is surface roughness (unit: µm) of the workpiece; *kₐ* is a correction coefficient, the magnitude of which depends on workpiece material; *n^{f}* is a spindle speed (unit: r/min) at the finish milling stage; *f^{f}* is a feed (unit: mm/r) at the finish milling stage; ${a}_{p}^{f}$ is a milling depth (unit: mm) at the finish milling stage; ${a}_{e}^{f}$ is a milling width (unit: mm) at the finish milling stage; *αₐ, βₐ, γₐ* and *δₐ* are exponents in the formula; and *αₐ, βₐ , γₐ* and *δₐ* may be obtained by experimental analysis combined with a statistical method.

In the present embodiment, an exponential surface roughness prediction model is adopted, and a function expression is as follows: ${R}_{a} = 25.234 \times {n}^{- 0.327} \times {f}^{0.322} \times {{a}_{p}}^{0.027} \times {{a}_{e}}^{0.259} .$

Step 4: determining constraint conditions; The constraint conditions include spindle speed constraint, feed constraint, feed speed constraint, milling depth constraint, milling width constraint, machine tool spindle rated power constraint, and tool life constraint.

The spindle speed constraint is: ${n}_{min}^{r} \leq {n}^{r} \leq {n}_{max}^{r} , {n}_{min}^{f} \leq {n}^{f} \leq {n}_{max}^{f}$*.*

The feed constraint is: ${f}_{min}^{r} \leq {f}^{r} \leq {f}_{max}^{r} , {f}_{min}^{f} \leq {f}^{f} \leq {f}_{max}^{f}$.

The feed speed constraint is: ${ν}_{f _ min}^{r} \leq {ν}_{f}^{r} \leq {ν}_{f _ max}^{r} , {ν}_{f _ min}^{f} \leq {ν}_{f}^{f} \leq {ν}_{f _ max}^{f}$.

The milling depth constraint is: ${a}_{p _ min}^{r} \leq {a}_{p}^{r} \leq {a}_{p _ max}^{r} , {a}_{p _ min}^{f} \leq {a}_{p}^{f} \leq {a}_{p _ max}^{f}$.

The milling width constraint is: ${a}_{e _ min}^{r} \leq {a}_{e}^{r} \leq {a}_{e _ max}^{r} , {a}_{e _ min}^{f} \leq {a}_{e}^{f} \leq {a}_{e _ max}^{f}$.

The machine tool spindle rated power constraint is: $\frac{{P}_{spindle} + {P}_{remove}}{η} \leq {P}_{max}$.

The tool life constraint: *T_{toollife}* ≥ *T_{economiclife}*.

To-be-machined plane dimension feature constraints are: ${H}_{P} = \left(k-1\right) {a}_{p}^{r} + {a}_{p}^{f}$*,* ${W}_{P} = \left({m}^{r}-1\right) {a}_{e}^{r} + {Δ}_{w}^{r}$ and ${W}_{P} = \left({m}^{f}-1\right) {a}_{e}^{f} + {Δ}_{w}^{f}$.

For multi-machining stage planar vertical milling combined with rough milling and finish milling, different constraint conditions are often adopted at the rough milling stage and the finish milling stage. During rough milling, priority should be given to increasing productivity, and generally, a large milling depth and feed should be selected, but cutting speed should not be very high. During finishing milling, priority should be given to ensuring the machining precision and surface quality of parts, and a small milling depth and feed and a high cutting speed are often adopted. In addition, combined with the technical specification parameters of the XHK-714F vertical machining center and the recommended range of cutting parameters of the W400F-FS coated tungsten steel tool, the constraint conditions of the machining process in the present embodiment are summarized in Table 2.

**Table 2: Constraint Conditions**

| constraint condition | constraint range |
|---|---|
| | 0 < *n^{r}* ≤ 3000r/min |
| | 0 < *f^{r}* ≤ 0.5mm/r |
| recommended range of cutting parameters of tool at rough milling stage | $0 < {ν}_{f}^{r} \leq 600 mm / min$ |
| | $0 < {a}_{p}^{r} \leq 5 mm$ |
| | $0 < {a}_{e}^{r} \leq 10 mm$ |
| | 1000 < *n^{f}* ≤ 5000r/min |
| | 0 < *f^{f}* ≤ 0.3mm/r |
| recommended range of cutting parameters of tool at finish milling stage | $0 < {ν}_{f}^{f} \leq 1000 mm / min$ |
| | $0 < {a}_{p}^{f} \leq 1 mm$ |
| | $0 < {a}_{e}^{f} \leq 10 mm$ |
| rated power of spindle of machine tool | $\frac{{P}_{spindle} + {P}_{remove}}{1000 \times 0.85} < 7.5 kW$ |
| tool life constraint | *T_{toollife}* > 35min |
| | ${H}_{P} = \left(k-1\right) {a}_{p}^{r} + {a}_{p}^{f}$ |
| to-be-machined plane dimension feature constraint | ${W}_{P} = \left({m}^{r}-1\right) {a}_{e}^{r} + {Δ}_{w}^{r}$ |
| | ${W}_{P} = \left({m}^{f}-1\right) {a}_{e}^{f} + {Δ}_{w}^{f}$ |

Step 5: establishing a multi-objective optimization mathematical model for planar vertical milling process parameters.

The multi-objective optimization mathematical model for planar vertical milling process parameters is: $min F \left({n}^{r}, {f}^{r}, {a}_{p}^{r}, {a}_{e}^{r}, {n}^{f}, {f}^{f}, {a}_{p}^{f}, {a}_{e}^{f}\right) = \left({minT}_{total}, {minE}_{total}, {minR}_{a}\right)$.

Step 6: obtaining, according to the multi-objective optimization mathematical model for planar vertical milling process parameters in step 5, a machining process parameter combination and a machining performance prediction value. When solving the multi-objective optimization mathematical model for planar vertical milling process parameters, some representative optimization algorithms for processing multi-objective optimization models, such as particle swarm optimization, genetic algorithm and artificial bee colony algorithm, can be adopted. These algorithms are characterized by generating multiple points and searching in multiple directions, very suitable for dealing with process parameter optimization as a multi-objective optimization problem where the optimal solution search space is very complex.

In the present embodiment, Python language programming is used to solve the model based on the multi-objective particle swarm optimization algorithm. The parameters of the algorithm are set as follows: a particle scale is 100, the number of particle dimensions is 8, the number of iterations is 200, an inertia weight *ω* is set as 0.9, and acceleration coefficients *C₁* and *C₂* are both set as 2. After the parameters are set, the algorithm is called several times to solve the multi-objective optimization mathematical model for planar vertical milling process parameters.

The process parameter combination and the machining performance prediction value obtained based on the present invention and a process parameter combination and a machining performance prediction value based on experience are shown in Table 3.

**Table 3: Process Parameter Combinations and Machining Performance Prediction Values under Optimal Solution and Empirical Solution**

| scheme ${a}_{e}^{r} / {a}_{e}^{f}$ ${a}_{e}^{r} / {a}_{e}^{f}$ | number of milled layers | *n^{r}* / *n^{f}* (r/min) | *f^{r}* / *f^{f}* (mm/r) | (mm) | (mm) | *Tₜₒₜₐₗ* (s) | *Eₜₒₜₐₗ* (J) | *Rₐ* (µm) |
|---|---|---|---|---|---|---|---|---|
| optimization scheme | 8-layer rough milling | 1817.58 | 0.31 | 1.86 | 6.90 | 1774.67 | 1893522.45 | 1.32 |
| | 1-layer finish milling | 3882.44 | 0.11 | 0.12 | 7.34 | | | |
| empirical scheme | 7-layer rough milling | 2000.00 | 0.20 | 2.00 | 7.00 | 2030.80 | 2102719.10 | 1.81 |
| | 1-layer finish milling | 3000.00 | 0.20 | 1.00 | 7.00 | | | |

Step 7: guiding, based on the machining process parameter combination and the machining performance prediction value obtained in step 6, an actual planar vertical milling process.

In the present embodiment, the process parameter combination (i.e. *n^{r}* =1817.58r/min , *f^{r}* =0.31mm/r , ${a}_{p}^{r} = 1.86 mm , {a}_{e}^{r} = 6.90 mm$, *n^{f}* =3882.44r/min , *f^{f}* =0.11mm/r , ${a}_{p}^{f} = 0.12 mm$ and ${a}_{e}^{f} = 7.34 mm$) obtained by the present invention is used for 8-layer rough milling planar machining and 1-layer fine milling planar machining, and a machining time prediction value is 1774.67 seconds, which is 256.13 seconds less than that of the empirical scheme, reduced by 12.61%. A machining energy consumption prediction value is 1893522.45 J, which is 209196.65 J lower than that of the empirical scheme, reduced by 9.95%. A workpiece surface roughness prediction value is 1.32 µm, which may be 0.49 µm lower than that of the empirical scheme, reduced by 27.07%. Therefore, better machining performance is achieved.

Certainly, the above descriptions are merely preferred embodiments of the present disclosure. The present disclosure is not limited to the above embodiments listed.

## Claims

1. A planar vertical milling parameter optimization and machining performance prediction method considering multiple machining stages, wherein comprising:
Step 1: making preparation: a part drawing is checked to identify a to-be-machined plane, dimension feature parameters of the to-be-machined plane are analyzed, and the models of a machine tool and a cutting tool are determined, so that a machining process is obtained;
Step 2: setting optimization variables: spindle speed *n^{r},* feed *f^{r} ,* milling depth ${a}_{p}^{r}$ and milling width ${a}_{e}^{r}$ at a rough milling stage and spindle speed *n^{f},* feed *f^{f},* milling depth ${a}_{p}^{f}$ and milling width ${a}_{e}^{f}$ at a finish milling stage are set as optimization variables;
Step 3: selecting optimization objectives: machining efficiency, machining energy consumption and machining quality; wherein comprising:
an objective function model for machining efficiency: ${T}_{total} = {t}_{standby} + {t}_{sra}^{r} + {t}_{unload}^{r} + {t}_{cutting}^{r} + {t}_{sra}^{f} + {t}_{unload}^{f} + {t}_{cutting}^{f} + {t}_{aux} ;$
in the formula, *Tₜₒₜₐₗ* is total time consumption in seconds of the planar vertical milling process considering the multiple machining stages; *t_{standby}* is pure standby time in seconds of the machine tool in the process of machining preparation and workpiece clamping; ${t}_{sra}^{r}$ and ${t}_{sra}^{f}$ are spindle acceleration times in seconds at the rough milling stage and the finish milling stage, respectively; ${t}_{unload}^{r}$ and ${t}_{unload}^{f}$ are idle times in seconds at the rough milling stage and the finish milling stage, respectively; ${t}_{cutting}^{r}$ and ${t}_{cutting}^{f}$ are material cutting times in seconds at the rough milling stage and the finish milling stage, respectively; and *tₐᵤₓ* is auxiliary time consumption in seconds of the planar vertical milling process considering the multiple machining stages;
an objective function model for machining energy consumption: ${E}_{total} = {E}_{standby} + {E}_{sra}^{r} + {E}_{unload}^{r} + {E}_{cutting}^{r} + {E}_{sra}^{f} + {E}_{unload}^{f} + {E}_{cutting}^{f} + {E}_{aux} ;$
in the formula, *Eₜₒₜₐₗ* is total energy consumption in Joule of the planar vertical milling process considering the multiple machining stages; *E_{standby}* is pure standby energy consumption in Joule of the machine tool in the process of machining preparation and workpiece clamping; ${E}_{sra}^{r}$ and ${E}_{sra}^{f}$ are spindle acceleration energy consumptions in Joule at the rough milling stage and the finish milling stage, respectively; ${E}_{unload}^{r}$ and ${E}_{unload}^{f}$ are idle energy consumptions in Joule at the rough milling stage and the finish milling stage, respectively; ${E}_{cutting}^{r}$ and ${E}_{cutting}^{f}$ are material cutting energy consumptions in Joule at the rough milling stage and the finish milling stage, respectively; and *Eₐᵤₓ* is auxiliary energy consumption in Joule of the planar vertical milling process considering the multiple machining stages;
an objective function model for machining quality: ${R}_{a} = {k}_{a} \times {\left({n}^{f}\right)}^{{α}_{a}} \times {\left({f}^{f}\right)}^{{β}_{a}} \times {\left({a}_{p}^{f}\right)}^{{γ}_{a}} \times {\left({a}_{e}^{f}\right)}^{{δ}_{a}} ;$
in the formula, *Rₐ* is surface roughness in µm of a workpiece; *kₐ* is a correction coefficient, the magnitude of which depends on workpiece material; *n^{f}* is a spindle speed in r/min at the finish milling stage; *f^{f}* is a feed in mm/r at the finish milling stage; ${a}_{p}^{f}$ is a milling depth in mm at the finish milling stage; ${a}_{e}^{f}$ is a milling width in mm at the finish milling stage; and *αₐ , βₐ , γₐ* and *δₐ* are exponents in the formula;
Step 4: determining constraint conditions;
the constraint conditions comprise spindle speed constraint, feed constraint, feed speed constraint, milling depth constraint, milling width constraint, machine tool spindle rated power constraint, and tool life constraint;
the spindle speed constraint is: ${n}_{min}^{r} \leq {n}^{r} \leq {n}_{max}^{r} , {n}_{min}^{f} \leq {n}^{f} \leq {n}_{max}^{f}$;
in the formula, ${n}_{min}^{r}$ and ${n}_{max}^{r}$ are a lowest rated speed and a highest rated speed in9 r/min of a spindle allowed by the machine tool at the rough milling stage, respectively; and ${n}_{min}^{f}$ and ${n}_{max}^{f}$ are a lowest rated speed and a highest rated speed in r/min of the spindle allowed by the machine tool at the finish milling stage, respectively;
the feed constraint is: ${f}_{min}^{r} \leq {f}^{r} \leq {f}_{max}^{r} , {f}_{min}^{f} \leq {f}^{f} \leq {f}_{max}^{f}$;
in the formula, ${f}_{min}^{r}$ and ${f}_{max}^{r}$ are a minimum feed and a maximum feed in mm/r allowed by the machine tool at the rough milling stage, respectively; and ${f}_{min}^{f}$ and ${f}_{max}^{f}$ are a minimum feed and a maximum feed in mm/r allowed by the machine tool at the finish milling stage, respectively;
the feed speed constraint is: ${ν}_{f _ min}^{r} \leq {ν}_{f}^{r} \leq {ν}_{f _ max}^{r} , {ν}_{f _ min}^{f} \leq {ν}_{f}^{f} \leq {ν}_{f _ max}^{f}$;
in the formula, ${ν}_{f}^{r}$ and ${ν}_{f}^{f}$ are feed speeds in mm/min at the rough milling stage and the finish milling stage, respectively; ${ν}_{f _ min}^{r}$ and ${ν}_{f _ max}^{r}$ are a minimum feed speed and a maximum feed speed in mm/min allowed by the machine tool at the rough milling stage, respectively; and ${ν}_{f _ min}^{f}$ and ${ν}_{f _ max}^{f}$ are a minimum feed speed and a maximum feed speed in mm/min allowed by the machine tool at the finish milling stage respectively;
the milling depth constraint is: ${a}_{p _ min}^{r} \leq {a}_{p}^{r} \leq {a}_{p _ max}^{r} , {a}_{p _ min}^{f} \leq {a}_{p}^{f} \leq {a}_{p _ max}^{f}$;
in the formula, ${a}_{p _ min}^{r}$ and ${a}_{p _ max}^{r}$ are a minimum milling depth and a maximum milling depth in mm allowed at the rough milling stage, respectively; and ${a}_{p _ min}^{f}$ and ${a}_{p _ max}^{f}$ are a minimum milling depth and a maximum milling depth in mm allowed at the finish milling stage, respectively;
the milling width constraint is: ${a}_{e _ min}^{r} \leq {a}_{e}^{r} \leq {a}_{e _ max}^{r} , {a}_{e _ min}^{f} \leq {a}_{e}^{f} \leq {a}_{e _ max}^{f}$;
in the formula, ${a}_{e _ min}^{r}$ and ${a}_{e _ max}^{r}$ are a minimum milling width and a maximum milling width in mm allowed at the rough milling stage, respectively; and ${a}_{e _ min}^{f}$ and ${a}_{e _ max}^{f}$ are a minimum milling width and a maximum milling width in mm allowed at the finish milling stage, respectively;
the machine tool spindle rated power constraint is: $\frac{{P}_{spindle} + {P}_{remove}}{η} \leq {P}_{max}$;
in the formula, *P_{spindle}* is rotational power in W of the spindle of the machine tool; *Pᵣₑₘₒᵥₑ* is a material removal power in W; *η* is a transmission efficiency of the spindle of the machine tool; and *P*ₘₐₓ is a rated power in W of a spindle motor of the machine tool;
the tool life constraint: *T_{toollife}* ≥ *T_{economiclife}*;
in the formula, *T_{toollife}* is a tool life in min; and *T_{economiclife}* is a minimum economic life in min of the cutting tool;
to-be-machined plane dimension feature constraints are: ${H}_{P} = \left(k-1\right) {a}_{p}^{r} + {a}_{p}^{f} , {W}_{P} = \left({m}^{r}-1\right) {a}_{e}^{r} + {Δ}_{w}^{r} and {W}_{P} = \left({m}^{f}-1\right) {a}_{e}^{f} + {Δ}_{w}^{f} ;$
in the formula, *H_{P}* is a height dimension feature in mm of the to-be-machined plane; *k* is the number of milled layers in the whole process of numerical control planar vertical milling; *Wₚ* is a width dimension feature in mm of the to-be-machined plane; *m^{r}* and *m^{f}* are the numbers of radial feeds of the cutting tool at the rough milling stage and the finish milling stage, respectively; and ${Δ}_{w}^{r}$ and ${Δ}_{w}^{f}$ are radial machining allowances in mm of the cutting tool at the rough milling stage and the finish milling stage, respectively;
Step 5: establishing a multi-objective optimization mathematical model for planar vertical milling process parameters;
the multi-objective optimization mathematical model for planar vertical milling process parameters is: $min F \left({n}^{r}, {f}^{r}, {a}_{p}^{r}, {a}_{e}^{r}, {n}^{f}, {f}^{f}, {a}_{p}^{f}, {a}_{e}^{f}\right) = \left({minT}_{total}, {minE}_{total}, {minR}_{a}\right)$ $s . t . \left\{\begin{matrix}{n}_{min}^{r} \leq {n}^{r} \leq {n}_{max}^{r} \\ {n}_{min}^{f} \leq {n}^{f} \leq {n}_{max}^{f} \\ {f}_{min}^{r} \leq {f}^{r} \leq {f}_{max}^{r} \\ {f}_{min}^{f} \leq {f}^{f} \leq {f}_{max}^{f} \\ {ν}_{f _ min}^{r} \leq {ν}_{f}^{r} \leq {ν}_{f _ max}^{r} \\ {ν}_{f _ min}^{f} \leq {ν}_{f}^{f} \leq {ν}_{f _ max}^{f} \\ {a}_{p _ min}^{r} \leq {a}_{p}^{r} \leq {a}_{p _ max}^{r} \\ {a}_{p _ min}^{f} \leq {a}_{p}^{f} \leq {a}_{p _ max}^{f} \\ {a}_{e _ min}^{r} \leq {a}_{e}^{r} \leq {a}_{e _ max}^{r} \\ {a}_{e _ min}^{f} \leq {a}_{e}^{f} \leq {a}_{e _ max}^{f} \\ \frac{{P}_{spindle} + {P}_{remove}}{η} \leq {P}_{max} \\ {T}_{toollife} \geq {T}_{economiclife} \\ {H}_{P} = \left(k-1\right) {a}_{p}^{r} + {a}_{p}^{f} \\ {W}_{P} = \left({m}^{r}-1\right) {a}_{e}^{r} + {Δ}_{w}^{r} \\ {W}_{P} = \left({m}^{f}-1\right) {a}_{e}^{f} + {Δ}_{w}^{f}\end{matrix}\right. ;$
Step 6: obtaining, according to the multi-objective optimization mathematical model for planar vertical milling process parameters in step 5, a machining process parameter combination and a machining performance prediction value;
Step 7: guiding, based on the machining process parameter combination and the machining performance prediction value obtained in step 6, an actual planar vertical milling process, wherein a generalized Taylor tool life formula is adopted at the tool life formula: ${T}_{toollife} = \frac{{C}_{T}}{{n}^{{α}_{t}} \times {{ν}_{f}}^{{β}_{t}} \times {{a}_{p}}^{{γ}_{t}} \times {{a}_{e}}^{{δ}_{t}}} ;$
in the formula, *C_{T}* is a constant term of the tool life formula, the value of which is related to the cutting tool and the workpiece material; *n* is a spindle speed in r/min; *v_{f}* is a feed speed in mm/min; *aₚ* is a milling depth in mm; *aₑ* is a milling width in mm; and *αₜ, βₜ, γₜ* and *δₜ* are formula correlation coefficients, wherein the Step 6 comprising:
obtaining, according to the multi-objective optimization mathematical model for planar vertical milling process parameters established in Step 5, values of corresponding *n^{r}* , *f^{r}* , ${a}_{p}^{r} , {a}_{e}^{r}$, *n^{f}* , *f^{f} ,* ${a}_{p}^{f} , {a}_{e}^{f}$ when $min F \left({n}^{r}, {f}^{r}, {a}_{p}^{r}, {a}_{e}^{r}, {n}^{f}, {f}^{f}, {a}_{p}^{f}, {a}_{e}^{f}\right)$.

## Patentansprüche

1. Verfahren zur Optimierung von Parametern und zur Vorhersage der Bearbeitungsleistung beim Planfräsen unter Berücksichtigung mehrerer Bearbeitungsstufen, **dadurch gekennzeichnet, dass** es die folgenden Schritte umfasst:
Schritt 1: Vorbereitung: Betrachten der Werkstückzeichnung, Identifizieren der zu bearbeitenden Fläche, Analysieren der Maßkenngrößen der zu bearbeitenden Fläche, Bestimmen des Typs der Werkzeugmaschine und des Typs des Schneidwerkzeugs sowie Ermitteln des Bearbeitungsprozesses;
Schritt 2: Festlegen der Optimierungsvariablen: Festlegen der Spindeldrehzahl *n^{r}* , des Vorschubs *f^{r} ,* der Frästiefe ${a}_{p}^{r}$ und der Fräsbreite ${a}_{e}^{r}$ in der Schruppfräsphase sowie der Spindeldrehzahl *n^{f} ,* des Vorschubs *f ^{f}*, der Frästiefe ${a}_{p}^{f}$ und der Fräsbreite ${a}_{e}^{f}$ in der Schlichtfräsphase als Optimierungsvariablen;
Schritt 3: Auswahl der Optimierungsziele: Auswahl der Bearbeitungseffizienz, des Bearbeitungsenergieverbrauchs und der Bearbeitungsqualität als Optimierungsziele;
wobei insbesondere das Zielfunktionsmodell für die Bearbeitungseffizienz wie folgt lautet: ${T}_{total} = {t}_{standby} + {t}_{sra}^{r} + {t}_{unload}^{r} + {t}_{cutting}^{r} + {t}_{sra}^{f} + {t}_{unload}^{f} + {t}_{cutting}^{f} + {t}_{aux} ;$
wobei *Tₜₒₜₐₗ* die Gesamtzeitdauer des Planfräsprozesses unter Berücksichtigung mehrerer Bearbeitungsstufen in Sekunden ist; *t_{standby}* die reine Wartezeit der Werkzeugmaschine für die Bearbeitungsvorbereitung und das Spannen des Werkstücks in Sekunden ist; ${t}_{sra}^{r}$ und ${t}_{sra}^{f}$ jeweils die Spindelbeschleunigungszeiten für die Schruppfräsphase bzw. für die Schlichtfräsphase in Sekunden sind; ${t}_{unload}^{r}$ und ${t}_{unload}^{f}$ jeweils die Leerlaufzeiten in der Schruppfräsphase bzw. in der Schlichtfräsphase in Sekunden sind; ${t}_{cutting}^{r}$ und ${t}_{cutting}^{f}$ jeweils die Zerspanungszeiten in der Schruppfräsphase bzw. in der Schlichtfräsphase in Sekunden sind; *tₐᵤₓ* die Nebenzeiten des Planfräsprozesses unter Berücksichtigung mehrerer Bearbeitungsstufen in Sekunden ist.
Das Zielfunktionsmodell für den Bearbeitungsenergieverbrauch lautet: ${E}_{total} = {E}_{standby} + {E}_{sra}^{r} + {E}_{unload}^{r} + {E}_{cutting}^{r} + {E}_{sra}^{f} + {E}_{unload}^{f} + {E}_{cutting}^{f} + {E}_{aux} ;$
wobei *Eₜₒₜₐₗ* der Gesamtenergieverbrauch des Planfräsprozesses unter Berücksichtigung mehrerer Bearbeitungsstufen in Joule ist; *E_{standby}* der reine Standby-Energieverbrauch der Werkzeugmaschine für die Bearbeitungsvorbereitung und das Spannen des Werkstücks in Joule ist; ${E}_{sra}^{r}$ und ${E}_{sra}^{f}$ die Spindelbeschleunigungs-Energieverbräuche in der Schruppfräsphase bzw. in der Schlichtfräsphase in Joule sind; ${E}_{unload}^{r}$ und ${E}_{unload}^{f}$ die Leerlauf-Energieverbräuche in der Schruppfräsphase bzw. in der Schlichtfräsphase in Joule sind; ${E}_{cutting}^{r}$ und ${E}_{cutting}^{f}$ die Hilfsenergieverbräuche des Planfräsprozesses in der Schruppfräsphase bzw. in der Schlichtfräsphase in Joule sind. *Eₐᵤₓ* der Hilfsenergieverbrauch des Planfräsprozesses unter Berücksichtigung mehrerer Bearbeitungsstufen in Joule ist;
Das Zielfunktionsmodell für die Bearbeitungsqualität lautet: ${R}_{a} = {k}_{a} \times {\left({n}^{f}\right)}^{{α}_{a}} \times {\left({f}^{f}\right)}^{{β}_{a}} \times {\left({a}_{p}^{f}\right)}^{{γ}_{a}} \times {\left({a}_{e}^{f}\right)}^{{δ}_{a}} ;$
wobei *Rₐ* die Oberflächenrauheit des Werkstücks in µm ist; *kₐ* der Korrekturfaktor ist, dessen Wert vom Werkstoff des Werkstücks abhängt; *n^{f}* die Spindeldrehzahl in der Schlichtfräsphase in r/min ist; *f ^{f}* der Vorschub in der Schlichtfräsphase in mm/r ist; ${a}_{p}^{f}$ die Frästiefe in der Schlichtfräsphase in mm ist; ${a}_{e}^{f}$ die Fräsbreite in der Schlichtfräsphase in mm ist; *αₐ , βₐ , γₐ* und *δₐ* Exponenten in der Formel sind;
Schritt 4: Festlegen der Nebenbedingungen;
Die Nebenbedingungen umfassen die Spindeldrehzahl-Nebenbedingung, die Vorschub-Nebenbedingung, die Vorschubgeschwindigkeits-Nebenbedingung, die Frästiefen-Nebenbedingung, die Fräsbreiten-Nebenbedingung, die Nebenbedingung für die Nennleistung der Maschinenspindel und die Nebenbedingung für die Standzeit des Schneidwerkzeugs;
Dabei gelten:
Spindeldrehzahl-Nebenbedingung: ${n}_{min}^{r} \leq {n}^{r} \leq {n}_{max}^{r} , {n}_{min}^{f} \leq {n}^{f} \leq {n}_{max}^{f}$;
wobei ${n}_{min}^{r} , {n}_{max}^{r}$ die von der Werkzeugmaschine in der Schruppfräsphase zugelassene minimale Nenndrehzahl bzw. maximale Nenndrehzahl der Spindel im Bereich von 9 r/min sind; ${n}_{min}^{f} , {n}_{max}^{f}$ die von der Werkzeugmaschine in der Schlichtfräsphase zugelassene minimale Nenndrehzahl bzw. maximale Nenndrehzahl der Spindel sind, jeweils in r/min;
Vorschub-Nebenbedingung: ${f}_{min}^{r} \leq {f}^{r} \leq {f}_{max}^{r} , {f}_{min}^{f} \leq {f}^{f} \leq {f}_{max}^{f}$;
wobei ${f}_{min}^{r} , {f}_{max}^{r}$ der von der Werkzeugmaschine in der Schruppfräsphase zugelassene minimale Vorschub bzw. maximale Vorschub in mm/r sind; ${f}_{min}^{f} , {f}_{max}^{f}$ der von der Werkzeugmaschine in der Schlichtfräsphase zugelassene minimale Vorschub bzw. maximale Vorschub in mm/r sind;
Vorschubgeschwindigkeits-Nebenbedingung: ${ν}_{f _ min}^{r} \leq {ν}_{f}^{r} \leq {ν}_{f _ max}^{r} , {ν}_{f _ min}^{f} \leq {ν}_{f}^{f} \leq {ν}_{f _ max}^{f}$;
wobei ${ν}_{f}^{r}$ und ${ν}_{f}^{f}$ die Vorschubgeschwindigkeiten in der Schruppfräsphase bzw. in der Schlichtfräsphase in mm/min sind; ${ν}_{f _ min}^{r}$ und ${ν}_{f _ max}^{r}$ die von der Werkzeugmaschine in der Schruppfräsphase zugelassene minimale bzw. maximale Vorschubgeschwindigkeit in mm/min sind; ${ν}_{f _ min}^{f}$ und ${ν}_{f _ max}^{f}$ die von der Werkzeugmaschine in der Schlichtfräsphase zugelassene minimale bzw. maximale Vorschubgeschwindigkeit in mm/min sind;
Frästiefen-Nebenbedingung: ${a}_{p _ min}^{r} \leq {a}_{p}^{r} \leq {a}_{p _ max}^{r} , {a}_{p _ min}^{f} \leq {a}_{p}^{f} \leq {a}_{p _ max}^{f}$;
wobei ${a}_{p _ min}^{r}$ und ${a}_{p _ max}^{r}$ die in der Schruppfräsphase zugelassene minimale bzw. maximale Frästiefe in mm sind; ${a}_{p _ min}^{f}$ und ${a}_{p _ max}^{f}$ die in der Schlichtfräsphase zugelassene minimale bzw. maximale Frästiefe in mm sind;
Fräsbreiten-Nebenbedingung: ${a}_{e _ min}^{r} \leq {a}_{e}^{r} \leq {a}_{e _ max}^{r} , {a}_{e _ min}^{f} \leq {a}_{e}^{f} \leq {a}_{e _ max}^{f}$;
wobei ${a}_{e _ min}^{r} , {a}_{e _ max}^{r}$ die in der Schruppfräsphase zugelassene minimale bzw. maximale Fräsbreite in mm sind; ${a}_{e _ min}^{f} , {a}_{e _ max}^{f}$ die in der Schlichtfräsphase zugelassene minimale bzw. maximale Fräsbreite in mm sind;
Nebenbedingung für die Nennleistung der Maschinenspindel: $\frac{{P}_{spindle} + {P}_{remove}}{η} \leq {P}_{max}$;
wobei *P_{spindle}* die Drehleistung der Maschinenspindel in W ist; *Pᵣₑₘₒᵥₑ* die Materialabtragsleistung in W ist; *η* der Wirkungsgrad des Spindelantriebs der Werkzeugmaschine ist; *P*ₘₐₓ die Nennleistung des Spindelmotors der Werkzeugmaschine in W ist;
Nebenbedingung für die Standzeit des Schneidwerkzeugs: *T_{toollife}* ≥ *T_{economiclife}*;
wobei *T_{toollife}* die Standzeit des Werkzeugs in min ist; *T_{economiclife}* die minimale wirtschaftliche Standzeit des Werkzeugs in min ist;
Abmessungs-Nebenbedingungen der zu bearbeitenden Fläche: ${H}_{P} = \left(k-1\right) {a}_{p}^{r} + {a}_{p}^{f} , {W}_{P} = \left({m}^{r}-1\right) {a}_{e}^{r} + {Δ}_{w}^{r} and {W}_{P} = \left({m}^{f}-1\right) {a}_{e}^{f} + {Δ}_{w}^{f} ;$
wobei *H_{P}* das Höhenmaß der zu bearbeitenden Fläche in mm ist; *k* die Anzahl der Fräslagen beim gesamten numerisch gesteuerten Planfräsprozess ist; *Wₚ* das Breitenmaß der zu bearbeitenden Fläche in mm ist; *m^{r}* und *m^{f}* die Anzahl der radialen Werkzeugzustellungen in der Schruppfräsphase bzw. in der Schlichtfräsphase sind; ${Δ}_{w}^{r}$ und ${Δ}_{w}^{f}$ die radialen Bearbeitungszugaben in der Schruppfräsphase bzw. in der Schlichtfräsphase in mm sind;
Schritt 5: Aufstellen des multikriteriellen Optimierungsmodells für die Planfräsprozessparameter;
Das multikriterielle Optimierungsmodell für die Planfräsprozessparameter lautet: $min F \left({n}^{r}, {f}^{r}, {a}_{p}^{r}, {a}_{e}^{r}, {n}^{f}, {f}^{f}, {a}_{p}^{f}, {a}_{e}^{f}\right) = \left({minT}_{total}, {minE}_{total}, {minR}_{a}\right)$ $s . t . \left\{\begin{matrix}{n}_{min}^{r} \leq {n}^{r} \leq {n}_{max}^{r} \\ {n}_{min}^{f} \leq {n}^{f} \leq {n}_{max}^{f} \\ {f}_{min}^{r} \leq {f}^{r} \leq {f}_{max}^{r} \\ {f}_{min}^{f} \leq {f}^{f} \leq {f}_{max}^{f} \\ {ν}_{f _ min}^{r} \leq {ν}_{f}^{r} \leq {ν}_{f _ max}^{r} \\ {ν}_{f _ min}^{f} \leq {ν}_{f}^{f} \leq {ν}_{f _ max}^{f} \\ {a}_{p _ min}^{r} \leq {a}_{p}^{r} \leq {a}_{p _ max}^{r} \\ {a}_{p _ min}^{f} \leq {a}_{p}^{f} \leq {a}_{p _ max}^{f} \\ {a}_{e _ min}^{r} \leq {a}_{e}^{r} \leq {a}_{e _ max}^{r} \\ {a}_{e _ min}^{f} \leq {a}_{e}^{f} \leq {a}_{e _ max}^{f} \\ \frac{{P}_{spindle} + {P}_{remove}}{η} \leq {P}_{max} \\ {T}_{toollife} \geq {T}_{economiclife} \\ {H}_{P} = \left(k-1\right) {a}_{p}^{r} + {a}_{p}^{f} \\ {W}_{P} = \left({m}^{r}-1\right) {a}_{e}^{r} + {Δ}_{w}^{r} \\ {W}_{P} = \left({m}^{f}-1\right) {a}_{e}^{f} + {Δ}_{w}^{f}\end{matrix}\right. ;$
Schritt 6: Gemäß dem multikriteriellen Optimierungsmodell für die Planfräsprozessparameter aus Schritt 5 werden eine Kombination von Bearbeitungsparametern sowie vorhergesagte Werte der Bearbeitungsleistung erhalten.
Schritt 7: Anhand der in Schritt 6 erhaltenen Kombination von Bearbeitungsparametern und vorhergesagten Werten der Bearbeitungsleistung wird der tatsächliche Planfräsprozess gesteuert;
Die Werkzeugstandzeitformel ist die erweiterte Taylor-Werkzeugstandzeitformel: ${T}_{toollife} = \frac{{C}_{T}}{{n}^{{α}_{t}} \times {{ν}_{f}}^{{β}_{t}} \times {{a}_{p}}^{{γ}_{t}} \times {{a}_{e}}^{{δ}_{t}}} ;$
wobei *C_{T}* der konstante Term der Werkzeugstandzeitformel ist, dessen Wert von den Werkzeug- und Werkstückmaterialien abhängt; *n* die Spindeldrehzahl in r/min ist; *v_{f}* die Vorschubgeschwindigkeit in mm/min ist; *aₚ* die Frästiefe in mm ist; *aₑ* die Fräsbreite in mm ist; *αₜ, βₜ , γₜ,* und *δₜ* die Korrelationskoeffizienten der Formel sind;
Konkrete Ausgestaltung von Schritt 6:
Gemäß dem in Schritt 5 aufgestellten multikriteriellen Optimierungsmodell für die Planfräsprozessparameter werden die Werte von *n^{r} , f^{r},* ${a}_{p}^{r} , {a}_{e}^{r}$, *n^{f}, f^{f},* ${a}_{p}^{f}$, ${a}_{e}^{f}$ ermittelt, die $min F \left({n}^{r}, {f}^{r}, {a}_{p}^{r}, {a}_{e}^{r}, {n}^{f}, {f}^{f}, {a}_{p}^{f}, {a}_{e}^{f}\right)$ entsprechen.

## Revendications

1. Méthode d'optimisation des paramètres de fraisage vertical plan et de prédiction des performances d'usinage prenant en compte plusieurs étapes d'usinage, **caractérisée par** les étapes suivantes :
Étape 1 : Préparation : un dessin de pièce est examiné afin d'identifier le plan à usiner, les paramètres dimensionnels de ce plan sont analysés et les modèles de la machine-outil et de l'outil de coupe sont déterminés, permettant ainsi d'obtenir un processus d'usinage ;
Étape 2 : Définition des variables d'optimisation : la vitesse de broche *n^{r}* , l'avance *f^{r},* la profondeur ${a}_{p}^{r}$ et la largeur de fraisage ${a}_{e}^{r}$ lors de l'ébauche, ainsi que la vitesse de broche *n^{f} ,* l'avance *f ^{f} ,* la profondeur ${a}_{p}^{f}$ et la largeur de fraisage ${a}_{e}^{f}$ lors de la finition, sont définies comme variables d'optimisation ;
Étape 3 : Sélection des objectifs d'optimisation : efficacité d'usinage, consommation d'énergie d'usinage et qualité d'usinage ; comprenant :
un modèle de fonction objectif pour l'efficacité d'usinage : ${T}_{total} = {t}_{standby} + {t}_{sra}^{r} + {t}_{unload}^{r} + {t}_{cutting}^{r} + {t}_{sra}^{f} + {t}_{unload}^{f} + {t}_{cutting}^{f} + {t}_{aux} ;$
Dans la formule, *Tₜₒₜₐₗ* représente le temps total en secondes du processus de fraisage vertical plan, en tenant compte des différentes étapes d'usinage ; *t_{standby}* représente le temps d'attente pur en secondes de la machine-outil lors de la préparation de l'usinage et du bridage de la pièce ; ${t}_{sra}^{r}$ et ${t}_{sra}^{f}$ représentent les temps d'accélération de la broche en secondes lors des étapes d'ébauche et de finition, respectivement ; ${t}_{unload}^{r}$ et ${t}_{unload}^{f}$ représentent les temps d'inactivité en secondes lors des étapes d'ébauche et de finition, respectivement ; ${t}_{cutting}^{r}$ et ${t}_{cutting}^{f}$ représentent les temps de coupe en secondes lors des étapes d'ébauche et de finition, respectivement ; et *tₐᵤₓ* représente le temps auxiliaire en secondes du processus de fraisage vertical plan, en tenant compte des différentes étapes d'usinage ;
un modèle de fonction objectif pour la consommation d'énergie d'usinage : ${E}_{total} = {E}_{standby} + {E}_{sra}^{r} + {E}_{unload}^{r} + {E}_{cutting}^{r} + {E}_{sra}^{f} + {E}_{unload}^{f} + {E}_{cutting}^{f} + {E}_{aux} ;$
Dans la formule, *Eₜₒₜₐₗ* représente la consommation d'énergie totale en joules du processus de fraisage vertical plan, en tenant compte des différentes étapes d'usinage ; *E_{standby}* représente la consommation d'énergie en veille pure en joules de la machine-outil lors de la préparation à l'usinage et du bridage de la pièce ; ${E}_{sra}^{r}$ et ${E}_{sra}^{f}$ représentent les consommations d'énergie d'accélération de la broche en joules lors des étapes d'ébauche et de finition, respectivement ; ${E}_{unload}^{r}$ et ${E}_{unload}^{f}$ représentent les consommations d'énergie à vide en joules lors des étapes d'ébauche et de finition, respectivement ; ${E}_{cutting}^{r}$ et ${E}_{cutting}^{f}$ représentent les consommations d'énergie de coupe du matériau en joules lors des étapes d'ébauche et de finition, respectivement ; et *Eₐᵤₓ* représente la consommation d'énergie auxiliaire en joules du processus de fraisage vertical plan, en tenant compte des différentes étapes d'usinage.
un modèle de fonction objectif pour la qualité d'usinage : ${R}_{a} = {k}_{a} \times {\left({n}^{f}\right)}^{{α}_{a}} \times {\left({f}^{f}\right)}^{{β}_{a}} \times {\left({a}_{p}^{f}\right)}^{{γ}_{a}} \times {\left({a}_{e}^{f}\right)}^{{δ}_{a}} ;$
Dans la formule, *Rₐ* représente la rugosité de surface (en µm) de la pièce ; *kₐ* est un coefficient de correction dont la valeur dépend du matériau de la pièce ; *n^{f}* est la vitesse de broche (en tr/min) lors de l'étape de fraisage de finition ; *f^{f}* est l'avance (en mm/tr) lors de l'étape de fraisage de finition ; ${a}_{p}^{f}$ est la profondeur de fraisage (en mm) lors de l'étape de fraisage de finition ; ${a}_{e}^{f}$ est la largeur de fraisage (en mm) lors de l'étape de fraisage de finition ; et *αₐ , βₐ , γₐ ,* et *δₐ* sont des exposants dans la formule ;
Étape 4 : Détermination des contraintes ;
Les contraintes comprennent les contraintes de vitesse de broche, d'avance, de vitesse d'avance, de profondeur de fraisage, de largeur de fraisage, de puissance nominale de la broche et de durée de vie de l'outil ;
La contrainte de vitesse de broche est : ${n}_{min}^{r} \leq {n}^{r} \leq {n}_{max}^{r} , {n}_{min}^{f} \leq {n}^{f} \leq {n}_{max}^{f}$;
Dans la formule, ${n}_{min}^{r}$ et ${n}_{max}^{r}$ représentent respectivement la vitesse nominale minimale et la vitesse nominale maximale (en 9 tr/min) de la broche autorisées par la machine-outil lors de l'étape d'ébauche ; ${n}_{min}^{f}$ et ${n}_{max}^{f}$ sont respectivement la vitesse nominale minimale et la vitesse nominale maximale en tr/min de la broche autorisée par la machine-outil à l'étape de fraisage de finition ;
La contrainte d'avance est : ${f}_{min}^{r} \leq {f}^{r} \leq {f}_{max}^{r} , {f}_{min}^{f} \leq {f}^{f} \leq {f}_{max}^{f}$;
Dans la formule, ${f}_{min}^{r}$ et ${f}_{max}^{r}$ représentent respectivement l'avance minimale et l'avance maximale (en mm/tr) autorisées par la machine-outil lors de l'ébauche ; et ${f}_{min}^{f}$ et ${f}_{max}^{f}$ représentent respectivement l'avance minimale et l'avance maximale (en mm/tr) autorisées par la machine-outil lors de la finition.
La contrainte de vitesse d'avance est : ${ν}_{f _ min}^{r} \leq {ν}_{f}^{r} \leq {ν}_{f _ max}^{r} , {ν}_{f _ min}^{f} \leq {ν}_{f}^{f} \leq {ν}_{f _ max}^{f}$;
Dans la formule, ${ν}_{f}^{r}$ et ${ν}_{f}^{f}$ représentent respectivement les vitesses d'avance (en mm/min) lors de l'ébauche et de la finition ; ${ν}_{f _ min}^{r}$ et ${ν}_{f _ max}^{r}$ représentent respectivement la vitesse d'avance minimale et la vitesse d'avance maximale (en mm/min) autorisées par la machine-outil lors de l'ébauche ; et ${ν}_{f _ min}^{f}$ et ${ν}_{f _ max}^{f}$ représentent respectivement la vitesse d'avance minimale et la vitesse d'avance maximale (en mm/min) autorisées par la machine-outil lors de la finition.
La contrainte de profondeur de fraisage est : ${a}_{p _ min}^{r} \leq {a}_{p}^{r} \leq {a}_{p _ max}^{r} , {a}_{p _ min}^{f} \leq {a}_{p}^{f} \leq {a}_{p _ max}^{f}$;
Dans la formule, ${a}_{p _ min}^{r}$ et ${a}_{p _ max}^{r}$ représentent respectivement la profondeur de fraisage minimale et la profondeur de fraisage maximale (en mm) autorisées lors de l'ébauche ; et ${a}_{p _ min}^{f}$ et ${a}_{p _ max}^{f}$ représentent respectivement la profondeur de fraisage minimale et la profondeur de fraisage maximale (en mm) autorisées lors de la finition.
La contrainte de largeur de fraisage est : ${a}_{e _ min}^{r} \leq {a}_{e}^{r} \leq {a}_{e _ max}^{r} , {a}_{e _ min}^{f} \leq {a}_{e}^{f} \leq {a}_{e _ max}^{f}$;
Dans la formule, ${a}_{e _ min}^{r}$ et ${a}_{e _ max}^{r}$ représentent respectivement une largeur de fraisage minimale et une largeur de fraisage maximale en mm autorisées lors de l'ébauche ; et ${a}_{e _ min}^{f}$ et ${a}_{e _ max}^{f}$ représentent respectivement une largeur de fraisage minimale et une largeur de fraisage maximale en mm autorisées lors de la finition.
La contrainte de puissance nominale de la broche de la machine-outil est : $\frac{{P}_{spindle} + {P}_{remove}}{η} \leq {P}_{max} ;$
Dans la formule, *P_{spindle}* représente la puissance de rotation en W de la broche de la machine-outil ; *Pᵣₑₘₒᵥₑ* représente la puissance d'enlèvement de matière en W ; *η* représente le rendement de transmission de la broche de la machine-outil ; et *P*ₘₐₓ représente la puissance nominale en W du moteur de broche de la machine-outil.
La contrainte de durée de vie de l'outil : *T_{toollife}* ≥ *T_{economiclife}* ;
Dans la formule, *T_{toollife}* représente la durée de vie de l'outil en min ; et *T_{economiclife}* représente la durée de vie économique minimale en min de l'outil de coupe.
Les contraintes dimensionnelles du plan à usiner sont : ${H}_{P} = \left(k-1\right) {a}_{p}^{r} + {a}_{p}^{f} , {W}_{P} = \left({m}^{r}-1\right) {a}_{e}^{r} + {Δ}_{w}^{r} et {W}_{P} = \left({m}^{f}-1\right) {a}_{e}^{f} + {Δ}_{w}^{f} ;$
Dans la formule, *H_{P}* représente la hauteur en mm du plan à usiner; *k* représente le nombre de passes fraisées lors du fraisage vertical planaire à commande numérique ; *Wₚ* représente la largeur en mm du plan à usiner ; *m^{r}* et *m^{f}* représentent les nombres d'avances radiales de l'outil de coupe lors de l'ébauche et de la finition, respectivement ; et ${Δ}_{w}^{r}$ et ${Δ}_{w}^{f}$ représentent les surépaisseurs d'usinage radiales en mm de l'outil de coupe lors de l'ébauche et de la finition, respectivement.
Étape 5 : Établissement d'un modèle mathématique d'optimisation multiobjectif pour les paramètres du processus de fraisage vertical plan ;
Le modèle mathématique d'optimisation multiobjectif pour les paramètres du processus de fraisage vertical plan est le suivant : $min F \left({n}^{r}, {f}^{r}, {a}_{p}^{r}, {a}_{e}^{r}, {n}^{f}, {f}^{f}, {a}_{p}^{f}, {a}_{e}^{f}\right) = \left({minT}_{total}, {minE}_{total}, {minR}_{a}\right)$ $s . t . \left\{\begin{matrix}{n}_{min}^{r} \leq {n}^{r} \leq {n}_{max}^{r} \\ {n}_{min}^{f} \leq {n}^{f} \leq {n}_{max}^{f} \\ {f}_{min}^{r} \leq {f}^{r} \leq {f}_{max}^{r} \\ {f}_{min}^{f} \leq {f}^{f} \leq {f}_{max}^{f} \\ {ν}_{f _ min}^{r} \leq {ν}_{f}^{r} \leq {ν}_{f _ max}^{r} \\ {ν}_{f _ min}^{f} \leq {ν}_{f}^{f} \leq {ν}_{f _ max}^{f} \\ {a}_{p _ min}^{r} \leq {a}_{p}^{r} \leq {a}_{p _ max}^{r} \\ {a}_{p _ min}^{f} \leq {a}_{p}^{f} \leq {a}_{p _ max}^{f} \\ {a}_{e _ min}^{r} \leq {a}_{e}^{r} \leq {a}_{e _ max}^{r} \\ {a}_{e _ min}^{f} \leq {a}_{e}^{f} \leq {a}_{e _ max}^{f} \\ \frac{{P}_{spindle} + {P}_{remove}}{η} \leq {P}_{max} \\ {T}_{toollife} \geq {T}_{economiclife} \\ {H}_{P} = \left(k-1\right) {a}_{p}^{r} + {a}_{p}^{f} \\ {W}_{P} = \left({m}^{r}-1\right) {a}_{e}^{r} + {Δ}_{w}^{r} \\ {W}_{P} = \left({m}^{f}-1\right) {a}_{e}^{f} + {Δ}_{w}^{f}\end{matrix}\right. ;$
Étape 6 : Obtention, selon le modèle mathématique d'optimisation multi-objectif des paramètres du processus de fraisage vertical plan (étape 5), d'une combinaison de paramètres d'usinage et d'une valeur prédictive des performances d'usinage ;
Étape 7 : Guidage, sur la base de la combinaison de paramètres d'usinage et de la valeur prédictive des performances d'usinage obtenues à l'étape 6, d'un processus de fraisage vertical plan réel, dans lequel une formule de durée de vie d'outil de Taylor généralisée est adoptée : ${T}_{toollife} = \frac{{C}_{T}}{{n}^{{α}_{t}} \times {{ν}_{f}}^{{β}_{t}} \times {{a}_{p}}^{{γ}_{t}} \times {{a}_{e}}^{{δ}_{t}}} ;$
Dans la formule, *C_{T}* est un terme constant de la formule de durée de vie d'outil, dont la valeur est liée à l'outil de coupe et au matériau de la pièce ; n est la vitesse de broche en ; *v_{f}* est la vitesse d'avance en mm/min ; *aₚ* est la profondeur de fraisage en ; *aₑ* est la largeur de fraisage en ; et *αₜ, βₜ, γₜ* et *δₜ* sont des coefficients de corrélation de la formule, l'étape 6 comprenant :
l'obtention, selon le modèle mathématique d'optimisation multi-objectif des paramètres du processus de fraisage vertical plan établi à l'étape 5, des valeurs correspondantes de *n^{r} , f ^{r} ,* ${a}_{p}^{r} , {a}_{e}^{r}$*, n^{f} , f^{f} ,* ${a}_{p}^{f} , {a}_{e}^{f}$ lorsque $min F \left({n}^{r}, {f}^{r}, {a}_{p}^{r}, {a}_{e}^{r}, {n}^{f}, {f}^{f}, {a}_{p}^{f}, {a}_{e}^{f}\right)$.
